# EUROPÄISCHE PATENTSCHRIFT

(11) **EP 2 266 003 B1**
(45) Veröffentlichungstag und Bekanntmachung des Hinweises auf die Patenterteilung: **20.06.2012**
(21) Anmeldenummer: 09715829.9
(22) Anmeldetag: 19.02.2009
(51) Int. Cl.: G05B 19/05

(54) **KONFIGURIERUNG VON MASCHINENABLÄUFEN**
CONFIGURATION OF MACHINE PROCESSES
CONFIGURATION D'OPÉRATIONS DE MACHINES

(30) Priorität: 26.02.2008 AT 1162008 U
(43) Veröffentlichungstag der Anmeldung: 29.12.2010
(73) Patentinhaber: KEBA AG, 4041 Linz (AT)
(72) Erfinder: STUMMER, Heinz, 4840 Vöcklabruck (AT)
(74) Vertreter: Burger, Hannes
(86) Internationale Anmeldenummer: PCT/AT2009/000061
(87) Internationale Veröffentlichungsnummer: WO 2009/105797

(56) Entgegenhaltungen:
- EP-A- 1 923 755
- DE-A1- 10 112 438
- DE-A1- 10 308 816
- US-B1- 6 256 598
- SEUNGJOO LEE ET AL.: "Automatic Generation of Logic Control"[Online] 2006, Seiten 1-49, XP002531933 Gefunden im Internet: URL:http://erc.engin.umich.edu/publication s/TechReport61.pdf> [gefunden am 2009-06-09] & "eM-PLC and STEP 7 Professional ? eMPower for manufacturing process management" TECNOMATIX, [Online] 2005, Seiten 1-3, XP002532350 Gefunden im Internet: URL:http://www.plma.com.au/iPublish/archiv es/1/080.010.040/5429/fs_tecnomatix_plc_st ep_tcm53-4944.pdf> [gefunden am 2009-06-09]
- JOHAN RICHARDSSON: "A Survey of Tools and Methods for Design of Automated Production Plants" ISR2002 33RD INTERNATIONAL SYMPOSIUM ON ROBOTICS, STOCKHOLM, SWEDEN, OCTOBER 7 - 11, 2002, 11. Oktober 2002 (2002-10-11), Seiten 391-396, XP009118118

## Beschreibung

Die Erfindung betrifft ein Verfahren zur benutzerseitig durch einen Grafikeditor unterstützten Erstellung, Änderung, Überwachung und/oder Optimierung des Gesamtmaschinenablaufes einer programmgesteuerten Maschine, wie es im Oberbegriff des Anspruches 1 beschrieben ist sowie eine Vorrichtung entsprechend Anspruch 22.

Ein solches Verfahren ist aus US6256598, sowie aus dem Artikel "Automatic Generation of Logic Control" von Seungjoo et al. bekannt.

Aus dem Stand der Technik sind mannigfache Verfahren bekannt, um programmgesteuerte Maschinen, wie sie beispielsweise in der Fertigungstechnik zum Einsatz kommen, für einen voll- oder teilautomatisierten Arbeitsprozess vorzukonfigurieren. In diesem Zusammenhang sind insbesondere Fertigungs- und Bearbeitungsmaschinen für die industrielle Serienfertigung, wie beispielsweise Spritzgießmaschinen oder Blechbiegemaschinen zu nennen, die ausgehend von einer Basisvariante mit unterschiedlichen optionalen Funktionseinheiten ausgerüstet oder konfigurierbar sein können und die je nach gefertigtem oder bearbeitetem Produkt oder Werkstück unterschiedliche Bearbeitungsabläufe ausführen. Solche Maschinen bestehen in der Regel aus einer Mehrzahl von Maschineneinheiten, aus deren koodiniertem Zusammenwirken der gewünschte Fertigungsprozess bzw. der gewünschte Gesamtmaschinenablauf gebildet wird. Die verfügbaren Grundfunktionen der Maschineneinheiten sind vom Maschinenhersteller und durch die konkrete technische Ausstattung der Maschine vorgegeben. Der Maschinenbetreiber bzw. der Benutzer kann diese Grundfunktionen jedoch innerhalb der vom Hersteller zugelassenen Grenzen parametrieren und kombinieren um den erforderlichen Bearbeitungsablauf festzulegen. Dabei macht der Benutzer über ein Bedienpult Konfigurierungseingriffe zur Zusammenstellung der benötigten Systemkomponenten, weiters zu Synchronisierungen, numerischen Parametrierungen, Überwachungs- und Optimierungsaufgaben, diversen Einstellungen und dergleichen. Aus diesen Eingaben werden Regeln zur Bildung von Steuersignalen abgeleitet, die auf den danach stattfindenden voll- oder teilautomatisierten Ablauf des durch die Maschine zu bewerkstelligenden Arbeitsprozesses wesentlichen Einfluss nehmen. Prozessbedingt sind bei der Kombination der Teilmaschinenabläufe bestimmte Abfolgen und Gleichzeitigkeiten einzuhalten. Zusätzlich ist gerade bei der Serienfertigung auf kleinstmögliche Prozesszykluszeiten pro Werkstück zu achten, um die Maschinenauslastung zu optimieren. Die geeignete zeitliche Verschachtelung der Teilmaschinenabläufe ist daher eine wichtige, aber auch durchaus anspruchsvolle Aufgabe für den Benutzer.

Nachteilig ist bei den bekannten Programmierverfahren, dass der Benutzer am Steuerpult, nur um sich über die Anordnung der einzelnen zeitlich sequentiell, überlappend oder parallel stattfindenden Teilmaschinenabläufe von im Allgemeinen verschiedenen Maschineneinheiten entlang der Zeitachse, d.h. für die Synchronisierung des Systems aller Teilmaschineneinheiten, einen für die Konfigurierung vorteilhaften Überblick zu verschaffen, bereits zeitraubende und mühselige Bedienhandlungen, wie z.B. das Öffnen einzelner Menüs und Übersichten, die Entnahme der wesentlichen Zeitinformationen aus diesen Darstellungen, gedankliche numerische Vergleiche dieser Zeitinformationen und allenfalls deren Niederschrift vornehmen muss, wenn nicht vom Grafikeditor zusätzliche Hilfen angeboten werden, deren Nutzen weiter unten besprochen wird. Bei jeder Änderung der Konfiguration des Gesamtmaschinenablaufes muss der beispielhaft beschriebene, umständliche Bedienungsvorgang von neuem durchlaufen werden.

Nachteilig ist bei den bekannten Verfahren aber auch, dass der Benutzer bei der Konfigurierung nicht unmittelbar einsieht, wie die Teilmaschinenabläufe jeder einzelnen Maschineneinheit hinsichtlich ihrer Anzahl, Dauer und relativen zeitlichen Festlegung über den gesamten Maschinenzyklus verteilt sind. Gerade diese Informationen sind jedoch bei der Überwachung einzelner Maschineneinheiten von besonderer Bedeutung.

Nachteilig ist bei den bekannten Verfahren schließlich noch, dass nicht auf einen Blick ersichtlich ist, welche Maschineneinheiten am Gesamtmaschinenablauf beteiligt sind, welche Teilmaschinenabläufe welchen Maschineneinheiten zugeordnet sind und welche Maschineneinheiten in welcher Phase des Maschinenzyklus aktiv sind.

Insbesondere diejenigen Konfigurierungsverfahren, bei denen die Konfigurierungshandlungen des Benutzers anhand flussdiagrammähnlicher Darstellungen des Gesamtmaschinenablaufes erfolgen, weisen diese Mängel auf. Die in Gesamtmaschinenabläufen häufig auftretenden zeitlichen Überlappungen von Teilmaschinenabläufen erschließen sich dem Benutzer auf diese Art und Weise nicht auf einen Blick, sondern müssen - wenn beispielsweise mehrere Sequenzen von Teilmaschinenabläufen nebenläufig stattfinden - durch Addition der Ablaufzeiten jedes Ablaufzweiges und nachfolgenden Vergleich der Ablaufzeiten, welche bestenfalls bereits neben den Ablaufsymbolen angeschrieben sind, bestimmt werden. Um weiters zu ermitteln, welche Teilmaschinenabläufe am Gesamtmaschinenablauf überhaupt beteiligt sind, ist es erforderlich, das gesamte Flussdiagramm nach unterschiedlichen Ablaufsymbolen abzusuchen. In ähnlicher Weise ist es erforderlich, das gesamte Ablaufdiagramm zur Feststellung der Anzahl von Teilmaschinenabläufen einer Maschineneinheit im Rahmen eines Maschinenzyklus zu durchkämmen, und auch deren zeitliche Einordnung in den Maschinenzyklus muss im Allgemeinen durch umständliche Bildung von Ablaufzeitsummen und deren Vergleich bestimmt werden. Diese für den Benutzer lästigen und fehleranfälligen Teilaufgaben sind im Hinblick auf einen zügigen und sicheren Konfigurierungsprozess äußerst hinderlich.

Natürlich könnten - wie der mit obiger Problematik konfrontierte Fachmann einwenden würde - für alle diese Teilaufgaben Unterprogramme erstellt werden, welche ihre Ergebnisse dem Benutzer beispielsweise in Zusatztabellen oder über andere Arten der Ausgabe vermitteln. Für einen flüssigen und sicheren Konfigurierungsvorgang ist aber jedenfalls eine Lösung vorzuziehen, die dem Benutzer alle oben genannten, der Konfigurierung und Überwachung dienlichen Informationen durch eine einzige Darstellung mit einem für diesen Zweck geeigneten Aufbau und nicht in Form mehrerer aufgesplitteter Informationseinheiten zur Kenntnis bringt. Es besteht der Wunsch nach einer interaktiven und intuitiven Form der Programmierung des Maschinenablaufes unter besonderer Berücksichtigung der zeitlichen Dauer und insbesondere der zeitlichen Verschränkung der einzelnen beteiligten Teilmaschinenabläufe.

Eine Aufgabe der vorliegenden Erfindung besteht daher darin, ein Verfahren zur Konfigurierung und Überwachung von Gesamtmaschinenabläufen zu schaffen, welches dem Benutzer als Unterstützung für die dazu vorzunehmenden Bedienhandlungen im Rahmen einer einzigen, kompakten Darstellung einen raschen Überblick über möglichst viele konfigurierungs- und überwachungsrelevante Details des Aufbaus des Gesamtmaschinenablaufes aus Teilmaschinenabläufen vermittelt. Insbesondere soll dem Benutzer ein Überblick nicht nur über etwaige parallel ablaufende Teilmaschinenabläufe und deren Zuordnung zu den Maschineneinheiten, sondern auch über deren zeitliche Verschränkung und Synchronität vermittelt werden. Eine weitere Aufgabe besteht darin, eine zur Durchführung dieses Verfahrens geeignete Vorrichtung zu schaffen.

Diese Aufgabe wird nach Anspruch 1 dadurch gelöst, dass die Zusammenstellung des gesamten Maschinenablaufes und alle weiteren wesentlichen Konfigurierungseingriffe in einem einzigen zweidimensionalen Ablaufdiagramm erfolgen, dessen Diagrammfläche durch eine gedachte oder visualisierte Maschinensystemachse in einer Maschinenkomponentendimcnsion und eine gedachte oder visualisierte Ablaufzeitachse in einer Zeitdimension aufgespannt wird. In diese Diagrammfläche werden alle Teilmaschinenabläufe, welche am Gesamtmaschinenablauf beteiligt sind, mit Hilfe des Grafikeditors durch vollautomatisierte oder benutzerinitiiert teilautomatisierte Positionierung oder Repositionierung zugeordneter Ablaufsymbole, und zwar in der Maschinenkomponentendimension entsprechend ihrer Zugehörigkeit zur einer Maschineneinheit und in der Zeitdimension entsprechend ihrer technisch erforderlichen und durch die Bedienperson gewünschten Synchronisierung mit anderen Teilmaschinenabläufen, eingetragen. Zur Synchronisierung ist oder wird dabei zu jedem Teilmaschinenablauf zumindest ein Zeitpunkt seines abgeschlossenen Ablaufzeitintervalls als Synchronisationszeitpunlct bestimmt, welcher für die zeitliche Anknüpfung an einen Synchronisationszeitpunkt eines weiteren Teilmaschinenablaufes derselben oder einer weiteren Maschineneinheit technisch zulässig ist. Diese zeitliche Anknüpfung wird vom Grafikeditor durch eine Positionierung der verknüpften Ablaufsymbole in Richtung der Ablaufzeitachse folgendermaßen zur Darstellung gebracht: Im Fall zweier zu verschiedenen Maschineneinheiten gehöriger, zu synchronisierender Teilmaschinenabläufe erfolgt die Darstellung der Synchronisation derart, dass die grafischen Darstellungen der verknüpften Synchronisationszeitpunkte, die sogenannten Anknüpfungspunkte, gemeinsam auf einer gedachten oder dargestellten Linie zu liegen kommen, welche zur Maschinensystemachse parallel verläuft und im Folgenden Synchronisierungslinie genannt wird. Zu einem Synchronisierungszeitpunkt eines Teilmaschinenablaufes kann es - je nach der Form des Ablaufsymbols - einen einzigen Anknüpfungspunkt oder mehrere Anknüpfungspunkte geben. Im Fall zweier zur gleichen Maschineneinheit gehöriger, zu synchronisierender Teilmaschinenabläufe wird prinzipiell dieselbe Art der Synchronisationsdarstellung angewandt. Die Synchronisierungslinie kann in diesem Fall jedoch zu einem Punkt entarten, der mit den beiden Anknüpfungspunkten der verknüpften Synchronisierungszeitpunkte zusammenfällt.

Es ist vorteilhaft den mindestens einen Synchronisationszeitpunkt eines Teilmaschinenablaufes innerhalb des abgeschlossenen Ablaufzeitintervalls festzulegen, weil dadurch die Dauer des Gesamtmaschinenablaufes im Sinne einer Produktivitätsmaximierung der programmgesteuerten Maschine oder Anlage möglichst kurz gehalten wird. In erster Linie bieten sich insbesondere der Start- und der Endzeitpunkt des Ablaufzeitintervalls eines Teilmaschinenablaufes als Synchronisationszeitpunkte an. Bei komplexeren Teilmaschinenabläufen, welche beispielsweise ihrerseits bereits mehrere Teilprozesse, Prozessstufen oder Zustände aufweisen, kann auch die Festlegung von Synchronisationszeitpunkten innerhalb des offenen Ablaufzeitintervalls erforderlich oder sinnvoll sein.

Die Aussagekraft dieses Ablaufdiagramms nach Anspruch 1 verwirklicht die Forderungen der erfindungsgemäßen Aufgabe in vielerlei Hinsicht. Eine Übersicht über die am Gesamtprozess beteiligten Maschineneinheiten ist nämlich unmittelbar durch die entlang der Maschinensystemachse in der Maschinenkomponentendimension gelisteten Menge aller am Gesamtmaschinenablauf beteiligten Maschineneinheiten gegeben, und eine zeitliche Zusammenschau aller Teilmaschinenabläufe ist unmittelbar aus der synchronisationsgerechten Anordnung aller Teilmaschinenabläufe in Richtung der Ablaufzeitachse ersichtlich. Eine separate zeitliche Zusammenschau der Teilmaschinenabläufe jeder einzelnen Maschineneinheit ergibt sich zwanglos dadurch, dass der matrixartige Aufbau des Ablaufdiagramms ausschließlich alle Teilmaschinenabläufe jeweils einer Maschineneinheit von vornherein als auf einen genau abgegrenzten Bereich der Diagrammfläche des Ablaufdiagramms beschränkte und daher mit einem Blick zu erfassende, synchronisationsgerechte Teildarstellung entlang der Ablaufzeitachse erscheinen lässt. Besonders vorteilhaft ist dieser matrixartige Aufbau dadurch, dass der Benutzer einerseits einfach erfassen kann, wann bzw. in welchen Phasen eines Maschinenzyklus eine bestimmte Maschineneinheit aktiv oder beteiligt ist, er andererseits aber auch auf einen Blick erkennt, welche Maschineneinheiten in einer bestimmten Phase des Maschinenzyklus gleichzeitig aktiv oder beteiligt sind. Es ist damit nicht nur das strukturelle, sondern auch das zeitliche Zusammenwirken der Maschineneinheiten einfach erfassbar.

Es ist für den Benutzer auch vergleichsweise einfach erkennbar, welche Teilmaschinenabläufe letztlich bestimmend für die Gesamtzyklusdauer sind und somit besondere Bedeutung hinsichtlich der für die Serienfertigung wichtigen Optimierung der Produktivität haben. Es ist aber auch einfach erkennbar, welche Teilmaschinenabläufe gegebenenfalls beispielsweise zu Verbesserungs- bzw. Optimierungszwecken zeitlich verzögert werden können, ohne dadurch die Gesamtzykluszeit zu erhöhen. In diesem Zusammenhang seien im speziellen die Verringerung bzw. Optimierung der von der gesamten Maschine aufgenommenen Spitzenleistung, des Druckluftverbrauches, der mechanischen Belastung oder der Lärmbelastung genannt.

Anspruch 1 beschreibt weiter eine Verdichtung der durch das Ablaufdiagramm dem Benutzer zu Konfigurierungs- und Überwachungszwecken vermittelten technischen Information, welche dadurch erreicht wird, dass zumindest ein Ablaufsymbol durch seine Art der Darstellung eine Orientierung in eine der beiden Richtungen der Zeitablaufachse aufweist und auf diese Weise eine zweiwertige Ablaufoption, insbesondere ein in verschiedenster Art denkbares Paar von Bewegungsvorgängen, bestehend aus einer Maschinenbewegung und ihrer Gegenbewegung, visualisieren kann. Bei der Maschinenbewegung bzw. deren Gegenbewegung kann es sich beispielsweise um zwei entgegengesetzt translatorische Bewegungen einer Maschineneinheit oder um zwei Drehbewegungen einer Maschineneinheit handeln, von denen eine im und die andere gegen den Uhrzeigersinn abläuft und somit die beiden axialen Vektoren der Winkelgeschwindigkeit zueinander entgegengesetzt gerichtet sind, oder auch ganz allgemein um zwei Maschinenbewegungen, die unabhängig von ihrer konkreten kinematischen Ausbildung insofern entgegengesetzt sind, als zum Beispiel eine der Maschinenbewegungen zur Öffnung und die andere zur Schließung einer Maschineneinheit dient.

Als weitere vorteilhafte Effekte des erfindungsgemäßen Verfahrens und der erfindungsgemäßen Vorrichtung sind eine Reduktion des Aufwandes für die Neueinschulung eines Benutzers, des Weiteren eine Verminderung der Wahrscheinlichkeit von Fehlbedienungen und die Möglichkeit einer besonders raschen Reaktion des Benutzers auf unerwünschte oder fehlerhafte Betriebszustände der Maschine festzuhalten.

Unter prozessbedingten Wartezeiten werden hier Wartezeiten verstanden, welche zumindest einem Teilmaschinenablauf als technisch erforderliche zeitliche Vorläufe oder Nachläufe zuzuordnen sind. Im Sinne einer systematischen Betrachtungsweise ist es durchaus vorteilhaft, diese Wartezeiten gemäß Anspruch 2 unter die Teilmaschinenabläufe zu subsumieren.

Da es oft zweckmäßig ist, besagte Wartezeiten nicht ausschließlich als durch die jeweils gegebenen physikalischen und/oder chemischen Prozessbedingungen geforderte Mindestwartezeiten festzusetzen, sondern zum Beispiel entsprechend der technischen Erfahrung des Benutzers mit der Konfigurierung und Überwachung des Gesamtmaschinenablaufes zu verlängern, empfiehlt es sich, die Wartezeiten gemäß Anspruch 2 einstellbar auszulegen.

Anspruch 3 betrifft die Verfahrensschritte zu Beginn des erfindungsgemäßen Verfahrens beginnend bei der Zusammenstellung der programmgesteuerten Maschine oder Anlage aus einzelnen Maschineneinheiten und die Fortsetzung dieses Verfahrens mit dem Ziel einer voll- oder teilautomatisierten Konfigurierung des Gesamtmaschinenablaufes. Diese Verfahrensschritte umfassen insbesondere die Benutzereingriffe zur Übernahme der Konfigurationsdaten einer bereits abgespeicherten Konfiguration bzw. zur Einleitung einer vollautomatisierten Neukonfigurierung bzw. zur teilautomatisierten Änderung einer abgespeicherten Konfiguration oder aber einer teilautomatisierten Neulconfigurierung eines Gesamtmaschinenablaufes. Vorteilhaft ist hierbei, dass die beschriebenen, mit diesen einleitenden Verfahrensschritten verbundenen Benutzereingriffe sehr einfach und rasch zielführend sind.

Eine in der Praxis sehr wichtige Verfahrensschrittfolge ist zum Beispiel jene, welche zur raschen Inbetriebnahme der programmgesteuerten Maschine mit bereits abgespeicherten, bewährten Konfigurationsdaten, insbesondere von herstellerseitig bereitgestellten Standardkonfigurationen, oder mit gegenüber diesen geringfügig abgeänderten Konfigurationsdaten führt. Der Benutzer wählt in diesem Fall - erforderlichenfalls nach Herstellung eines speziellen Betriebsmodus, also zum Beispiel nach Auswahl des Betriebsmodus "Programmierung" mit Hilfe eines Betriebsartenwahlschalters - die Maschinensystemachse des Ablaufdiagramms an, erhält vom Grafikeditor eine Liste aller abgespeicherten Konfigurationen in Gestalt eines Auswahlmenüs präsentiert, wählt eine dieser Konfigurationen aus, bewirkt damit die Eintragung der zu den Maschineneinheiten dieser Konfiguration gehörenden Symbole an die Maschinensystemachse sowie die Übertragung der in dieser Konfiguration verwendeten Teilmaschinenabläufe über ihre Ablaufsymbole in die Diagrammfläche des Ablaufdiagramms und hat dann unter Voraussetzung der dafür erforderlichen Autorisierung die Möglichkeit, die Übernahme dieser Konfigurationsdaten durch die Maschinensteuerung und den Start des Gesamtmaschinenablaufes je nach Betriebswunsch beispielsweise durch Anwahl eines der Betriebsmodi "Automatik" oder "Halbautomatik" des Betriebsartenwahlschalters auszulösen.

Möchte der Benutzer vor dem Start eine Änderung der aus einem Speicher abgerufenen Konfiguration durchführen, so startet er die dafür erforderliche teilautomatisierte Konfigurierung in einem speziellen Betriebsmodus, zum Beispiel im Betriebsmodus "Programmierung" - durch Anwählen des Symbols einer jener Maschineneinheiten, für welche mindestens ein Teilmaschinenablauf abgeändert werden soll, führt diese teilautomatisierte Konfigurierung durch und startet dann den realen Gesamtmaschinenablauf etwa durch Auswahl eines der Betriebsmodi "Automatik" oder "Halbautomatik" mit Hilfe des Betriebsartenwahlschalters.

Eine weitere in der Praxis wichtige Verfahrensschrittfolge geht von einer Neuzusammenstellung des Gesamtmaschinenablaufes aus. Der Benutzer öffnet - beispielsweise im Betriebsmodus "Programmierung" - einen Katalog des Grafikeditors für Maschineneinheiten, wählt dort alle für den neuen Gesamtmaschinenablauf vorgesehenen Maschineneinheiten aus und bewirkt mit der Bestätigung dieser Auswahl zunächst die Eintragung der zu den Maschineneinheiten dieser Konfiguration gehörenden Symbole an die Maschinensystemachse. Wählt der Benutzer nun die Maschinensystemachse an, so löst er damit eine vollautomatische Konfigurierung dieses Gesamtmaschinenablaufes durch den Grafikeditor aus. Dieser trifft unter den Teilmaschinenabläufen aller durch den Benutzer aus dem Katalog ausgewählten Maschineneinheiten eine Standardauswahl, synchronisiert und parametriert diese mit Standardeinstellungen und überträgt diese Auswahl an Teilmaschinenabläufen über ihre Ablaufsymbole in die Diagrammfläche des Ablaufdiagramms. Ähnlich wie oben besteht auch in diesem Fall für den Benutzer die Möglichkeit, entweder den Gesamtmaschinenablauf durch Umstellung des Betriebsartenwahlschalters beispielsweise vom Betriebsmodus "Programmierung" auf einen der Betriebsmodi "Automatik" oder "Halbautomatik" gleich zu starten oder zuvor noch eine teilautomatisierte Änderung dieser Konfiguration durchzuführen. Eine teilautomatisierte Konfigurierung des Gesamtmaschinenablaufes kann aber auch schon unmittelbar nach der Bestätigung der benutzerseitigen Auswahl aller am Gesamtmaschinenablauf zu beteiligenden Maschineneinheiten aus dem Katalog des Grafikeditors erfolgen, indem der Benutzer in diesem Fall - anstatt die Maschinensystemachse anzuwählen - das erfindungsgemäße Verfahren durch Anwählen des Symbols für eine jener Maschineneinheiten an der Maschinensystemachse fortsetzt, von denen er mindestens einen Teilmaschinenablauf ändern möchte.

Anspruch 4 beschreibt eine vorteilhafte Methode für die teilautomatische, benutzergeführte Auswahl und Synchronisierung von zumindest einer Teilmenge der Menge aller an einem Gesamtmaschinenablauf beteiligten Teilmaschinenabläufe. Im Fall einer teilautomatisierten Erstellung oder Ergänzung des Gesamtmaschinenablaufes wählt der Benutzer in einem ersten Auswahlschritt zunächst das Symbol der Maschineneinheit an, mit welcher der gewünschte Teilmaschinenablauf ausgeführt werden soll, öffnet dadurch ein Menü oder Auswahlfenster, welches eine Menge von für diese Maschineneinheit verfügbaren und verwendbaren Teilmaschinenabläufen zur Auswahl anbietet und wählt daraus im zweiten Auswahlschritt den gewünschten Teilmaschinenablauf aus. Der Grafikeditor zeigt dem Benutzer daraufhin auf der Diagrammfläche alle für diesen Teilmaschinenablauf zur Synchronisierung zulässigen Anknüpfungspunkte von bereits im Gesamtmaschinenablauf vorbestehenden Teilmaschinenabläufen sowie gegebenenfalls vorbestehende Synchronisationslinien an. Im dritten Auswahlschritt wählt der Benutzer nun einen Anknüpfungspunkt, eine Synchronisationslinie oder die Maschinensystemachse aus und legt damit die Synchronisierung des neuen Teilmaschinenablaufes zum vorbestehenden Gesamtmaschinenablauf fest. Der Grafikeditor positioniert nun das Ablaufsymbol des neuen Teilmaschinenablaufes entsprechend seiner Zugehörigkeit zu einer Maschineneinheit und seiner Synchronisierung mit dem Gesamtmaschinenablauf auf der Diagrammfläche und fügt erforderlichenfalls eine Synchronisationslinie zwischen dem Startanknüpfungspunkt des neuen Ablaufsymbols und dem vom Benutzer gewählten Anknüpfungspunkt hinzu.

Der Vorteil der Methode nach Anspruch 5 liegt darin, dem Benutzer die Konfigurierungsarbeit dadurch zu erleichtern, dass in jenen Fällen, in welchen der ausgewählte Teilmaschinenablauf reversibel ist bzw. eine zweiwertige Ablaufoption aufweist und aufgrund der Zyklizität des Gesamtmaschinenablaufes die Ausführung der jeweils komplementären Ablaufoption innerhalb eines Maschinenzyklus zwingend erforderlich ist, der Grafikeditor nach Auswahl des Teilmaschinenablaufes durch den Benutzer zusätzlich automatisch den komplementären Teilmaschinenablauf oder einen ergänzenden Teilmaschinenablauf zur Rückführung der betroffenen Maschineneinheit in eine definierte Grundstellung auswählt und alle für beide Teilmaschinenabläufe zur Festlegung der Synchronisierung zulässigen Synchronisierungslinien und Anknüpfungspunkte von Ablaufsymbolen des vorbestehenden Gesamtmaschinenablaufes mit Kennzeichnung der Zuordnung jeder Synchronisierungslinie und jedes Anknüpfungspunktes zu einem der beiden Teilmaschinenabläufe zur folgenden Synchronisierung beider Teilmaschinenabläufe mit dem vorbestehenden Gesamtmaschinenablauf in der Diagrammfläche darstellt.

Anspruch 6 beschreibt die vorteilhafte Benutzeroption, bei teilautomatisierter Synchronisierung nur einen Teil der Teilmaschinenabläufe manuell synchronisieren zu müssen und durch einen bestätigten Abschluss der manuellen Synchronisierung die vollautomatische Synchronisierung der noch nicht synchronisierten Teilinaschinenabläufe durch den Grafikeditor oder durch ein durch letzteren aufgerufenes Unterprogramm sowie die demgemäß synchronisierungsgerechte und hinsichtlich der Maschinenkomponentendimension korrekte Eintragung der zu den vollautomatisiert synchronisierten Teilmaschinenabläufen gehörenden Ablaufsymbole in das Ablaufdiagramm auszulösen.

Auch die Maßnahme gemäß Anspruch 7, eine grafische Darstellung durch Synchronisationslinien oder Anknüpfungspunkte oder eine zusätzliche tabellarische Darstellung zumindest eines Teils aller im Zuge des Aufbaues des Ablaufdiagramms bereits eingetragenen Synchronisationszeitpunkte durch symbolische oder verbale Zusatzeinträge in der Diagrammebene oder in einem darin eingeblendeten Fenster zur Unterstützung der benutzerseitigen Auswahl technisch zu erläutern, ist im Sinne erhöhter Klarheit und Sicherheit in der Maschinenbedienung jedenfalls als vorteilhafte Ergänzung anzusehen.

Eine weitere für das erfindungsgemäße Verfahren vorteilhafte, weil noch präzisere Ausführung des Ablaufdiagramms wird durch Anspruch 8 in Form der zeitmaßstabsgerecht der Ablaufdauer entsprechenden Erstreckung sämtlicher Ablaufsymbole in Richtung der Ablaufzeitachse vorgestellt.

Anspruch 9 gibt eine vorteilhafte Methode an, dem Benutzer die zumindest zur Durchführung der erfindungsgemäßen Konfigurierungs- und Überwachungsaufgaben benötigten Informationen über die Teilmaschinenabläufe im Rahmen des Ablaufdiagramms noch stärker verdichtet anzubieten. Es spricht absolut nichts dagegen, dass die Maschinensystemachse des Ablaufdiagramms zusätzlich zu der durchgehenden Maschinenkomponentendimension noch weitere achsenabschnittsweise unterschiedliche, insbesondere physikalische Dimensionen darstellt und die grafischen Ablaufsymbole dementsprechend mit den einzelnen Maschineneinheiten zugeordneten, im allgemeinen unterschiedlichen Parametermaßstäben entsprechender Erstreckung in Richtung der Maschinensystemachse in das Ablaufdiagramm eingetragen werden. Als Parameter für solch eine Darstellung kommen beispielsweise kinematische und kinetische Parameter wie zurückgelegte Wegstrecken, Geschwindigkeiten, Drehzahlen und Kreisfrequenzen, Beschleunigungen, Winkelbeschleunigungen, Impulse, Drehimpulse, Kräfte, Massen etc. in Betracht. Weitere Beispiele für Parameter, deren Darstellung in obiger Art und Weise Sinn macht, sind die aufgenommene Maschinenleistung, Maße für Lärm, mechanische Belastung oder ähnliche Größen, welche beispielsweise Gegenstand von Optimierungsbestrebungen sein können.

Für den Fall stark unterschiedlicher Ablaufdauem der Teilmaschinenabläufe bei zeitmaßstabsgerecht der Ablaufdauer entsprechender Erstreckung sämtlicher Ablaufsymbole in Richtung der Ablaufzeitachse sieht Anspruch 10 als Verbesserung des erfindungsgemäßen Verfahrens die Einführung von Skalierungen vor, welche einen Ausgleich der Darstellungsgröße der Ablaufsymbole in Richtung der Ablaufzeitachse durch zumindest partielle Kompression und/oder Streckung der Ablaufzeitachse herbeiführen und dadurch sicherstellen, dass je zwei rechnerisch als technisch zulässig ermittelte, unmittelbar benachbarte grafische Anknüpfungselemente, also entweder Anknüpfungspunkte oder Synchronisationslinien, ungeachtet ihrer tatsächlichen praxisgerecht zur Anwahl durch den Benutzer ausge-stalteten Darstellung im Ablaufdiagramm einen vorgegebenen Mindestabstand einhalten.

Anspruch 11 sichert die Übersichtlichkeit des Ablaufdiagramms durch die Bedingung ab, die Gesamtmaschine nur aus Maschineneinheiten aufzubauen, welche zu jedem Zeitpunkt keinen oder genau einen Teilmaschinenablauf durchführen können. Andernfalls kann die Ausführung mindestens zweier Teilmaschinenabläufe ein- und derselben Maschineneinheit zum selben Zeitpunkt in ihrer Darstellung im Ablaufdiagramm dazu führen, dass die zugehörigen Ablaufsymbole einander zumindest teilweise überdecken. Solch eine für den Benutzer unvorteilhafte Darstellung kann einfach durch weitere zweckmäßige Unterteilung komplexer Maschineneinheiten vermieden werden.

Anspruch 12 beschreibt eine vorteilhafte Art der Parametrierung eines Teilmaschinenablaufes durch den Benutzer anhand des Ablaufdiagramms im Fall einer teilautomatisierten Konfigurierung des Gesamtmaschinenablaufes. Der Benutzer wählt das bereits im Ablaufdiagramm eingetragene, zugehörige grafische Ablaufsymbol an, worauf sich ein Eingabe- bzw. Auswahlmenü öffnet, anhand dessen der Benutzer Parameterwerte eingibt bzw. Einstelloptionen auswählt.

Vorteilhaft im Sinne einer Effizienzsteigerung bei der Abwicklung der erfindungsgemäßen Konfigurierung von Maschinenabläufen ist nach Anspruch 13 auch die Forderung nach weitgehender Reduktion der Parametrierungseingriffe. Nach Anspruch 3 erfolgt eine vollautomatisierte Neukonfigurierung eines Gesamtmaschinenablaufes mit Standard-Parameterwerten, und bei Übernahme einer gespeicherten Konfiguration werden gespeicherte Parameterwerte geladen. Eine allenfalls erforderliche teilweise Abänderung der Parametrierung braucht in beiden Fällen am wenigsten Zeit und schließt am sichersten dann Eingabefehler aus, wenn nur auf jene Parameter zugegriffen wird, welche auch tatsächlich verändert werden müssen.

Anspruch 14 unterstützt die Überwachung mehrerer qualitativ unterschiedlicher Parameter zumindest eines Teilmaschinenablaufes einer bestimmten Maschineneinheit durch den Benutzer in einfacher Weise dadurch, dass diese Parameterwerte in unmittelbarer örtlicher Nachbarschaft des zugehörigen Ablaufsymbols ausgegeben werden.

Anspruch 15 beschreibt einen Spezialfall der Unterstützung von Optimierungseingriffen des Benutzers durch das Ablaufdiagramm im Rahmen des erfindungsgemäßen Verfahrens. Der Grafikeditor oder ein von ihm aufgerufenes Unterprogramm überwacht gemäß diesem Anspruch die Maschinenzykluszeiten. Werden dabei Verzögerungszeiten festgestellt, so wird eine den Gesamtmaschinenablauf oder eine Gruppe von Teilmaschinenabläufen oder überhaupt nur einen einzigen Teilmaschinenablauf erfassende Optimierungsrechnung durchgeführt, deren Ergebnisse und/oder darauf fußende Parameteränderungsvorschläge betreffend die in die Optimierungsrechnung einbezogenen Teilmaschinenabläufe im Ablaufdiagramm zusammen mit einer diesbezüglichen Fundmeldung grafisch und/oder tabellarisch ausgegeben werden.

Anspruch 16 listet einige physikalische Größen, welche den Fertigungsprozess einer Spritzgießmaschine maßgeblich beeinflussen, als spezielle, im Rahmen einer Parametrierung vorteilhaft veränderbare parametrische Größen im Sinne der vorhergehenden Ansprüche auf.

Anspruch 17 stellt den rechten Winkel zwischen der Maschinensystemachse und der Ablaufzeitachse des Ablaufdiagramms als den vorteilhaftesten Spezialfall eines Achsenwinkels bei Einsatz des Ablaufdiagramms im Rahmen des erfindungsgemäßen Verfahrens dar. Andere Winkel sind zwar ebenfalls denkbar, in der Praxis aber eher ungebräuchlich.

Anspruch 18 beschreibt die Verwendung rechtwinkeliger und gleichschenkeliger Dreiecke als zwei vorteilhafte - weil einfache und doch für den Einsatz im Ablaufdiagramm besonders aussagekräftige - Formen von Ablaufsymbolen im erfindungsgemäßen Verfahren. Dabei kann im Sinne einer raschen Unterscheidung von anderen Arten von Teilmaschinenabläufen für die prozessbedingten Wartezeiten nicht nur eine unterschiedliche Dreiecksform verwendet, sondern die Dreiecksfläche zusätzlich befüllt werden. Die Erstreckung der rechtwinkeligen Dreiecke parallel zur Maschinensystemachse kann beispielsweise zur Darstellung von Parametern genützt werden, welche allen Teilmaschinenabläufen einer Maschineneinheit gemeinsam sind. Die einfache Orientierbarkeit der Dreieckssymbole in zwei entgegengesetzte Richtungen parallel zur Ablaufzeitachse trägt zusätzlich zwanglos den Erfordernissen der Darstellung zweier gegenläufiger Ablaufoptionen Rechnung.

Anspruch 19 stellt die vorteilhafte Möglichkeit der hierarchischen Verfeinerung des Ablaufdiagramms im Rahmen des erfindungsgemäßen Verfahrens vor. Bei komplexen Gesamtmaschinenabläufen kann es durchaus vorkommen, dass die Größe des Bildschirmes des Steuerpultes in Zusammenwirkung mit der begrenzten Auflösung dieses Bildschirmes nicht ausreicht, um dem Benutzer alle Ablaufstrukturen in für die unterschiedlichen Zweckbestimmungen des erfindungsgemäßen Verfahrens hinreichender Klarheit in einer einzigen Systemebene zu vermitteln. Die detailliertere Darstellbarkeit von Teilstrukturen in hinterlegten, hierarchisch tiefer gelegenen Systemebenen des Ablaufdiagramms schafft hier unter der Voraussetzung, dass die Strukturelemente auch in den hierarchisch tiefer gelegenen Systemebenen gleichartig gestaltet und ohne Einschränkungen genauso manipulierbar sind bzw. sich genauso verhalten wie jene in der höchsten Systemebene, wirksame Abhilfe.

Die Maßnahmen gemäß Anspruch 20 decken in vorteilhafter Art jene Zwischenfälle des erfindungsgemäßen Verfahrens ab, die zufolge menschlichen Irrtums bei den Benutzereingriffen oder zufolge eines Verfahrensfehlers oder technischen Versagens zumindest einer Maschineneinheit bei der Abwicklung des Verfahrens, z.B. während der Überwachung eines Fertigungsprozesses, auftreten. Wenn Plausibilitätsüberprüfungen Eingabefehler des Benutzers aufdecken, kann der Benutzer zur Eingabewiederholung aufgefordert und/oder seine Eingabe mit einer Fehlermeldung quittiert werden. Bei Verfahrensfehlern oder technischem Versagen einer Maschineneinheit im laufenden und überwachten Betrieb der programmgesteuerten Maschine oder Anlage können ebenfalls Fehlermeldungen beispielsweise in einem in das Ablaufdiagramm eingeblendeten Fenster ausgegeben werden.

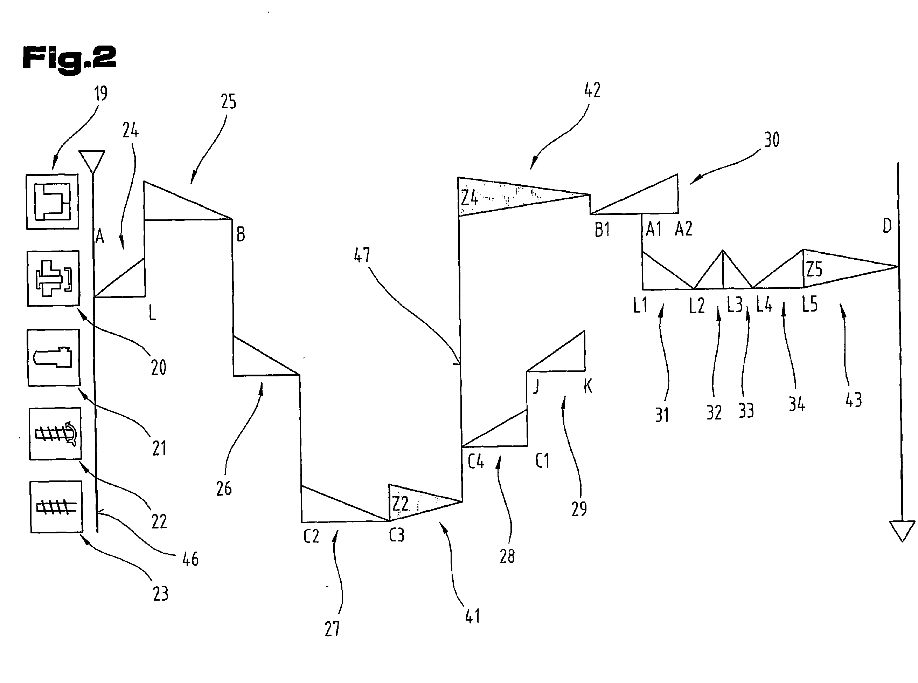

Anspruch 21 beschreibt als konkretes Ausführungsbeispiel eines nach dem erfindungsgemäßen Verfahren konfigurierten Gesamtmaschinenablaufes einen Maschinenzyklus eines Spritzgießverfahrens in Anlehnung an die Darstellung im Ablaufdiagramm gemäß Fig. 2.

Anspruch 22 beschreibt eine vorteilhafte Vorrichtung zur Abwicklung des Verfahrens nach den Ansprüchen 1 bis 21. Die dafür erforderlichen Mittel zur Eingabe von Konfigurationsdaten können beispielsweise. Eingabestifte oder fest am Steuerpult montierte Handbediengeräte zur Navigation umfassen, als Mittel für die erforderliche elektronische Datenverarbeitung in Echtzeit kommen in erster Linie Mikrorechner, also Mikrocontroller und/oder Signalprozessoren in Betracht, Mittel zur grafischen Visualisierung des Ablaufdiagramms können durch Touch-Screens oder andere Arten von LCD- bzw. TFT-Schirmen realisiert sein, und die Übertragung der Konfigurationsdaten wird angesichts des in programmgesteuerten Fertigungsmaschinen oft integrierten Steuerpultes in der Regel über geschirmte elektrische Leitungen erfolgen.

Anspruch 23 befürwortet einen vorteilhafterweise integrierten Online-Grafikeditor, also einen zur Ankopplung an die Echtzeitverarbeitung der Maschinen- oder Anlagensteuerung fähigen Grafikeditor, und Anspruch 24 einen für die Ausgestaltung von Steuerpulten besonders vorteilhaften Touch-Screen zur Ausführung des erfindungsgemäßen Verfahrens.

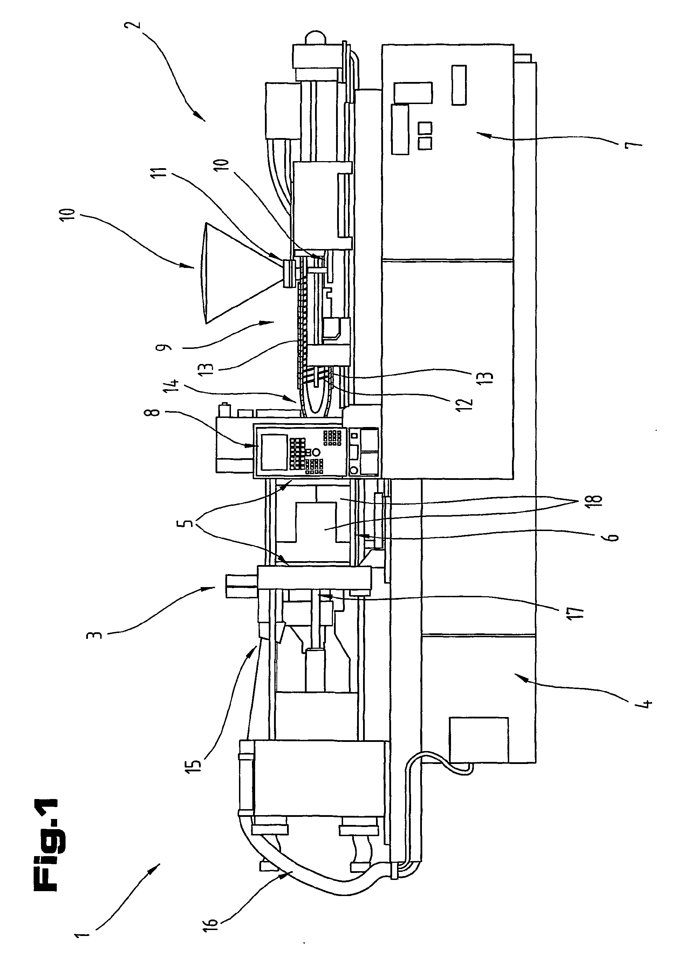

Die Ansprüche 25 und 26 beschreiben konkrete Realisierungen von Maschineneinheiten einer Spritzgießmaschine zur Ausführung des erfindungsgemäßen Verfahrens, wie sie in vereinfachter Form schematisch in Fig. 1 dargestellt sind.

Im Folgenden werden nun konkrete Ausführungsbeispiele für Mittel zur Durchführung des erfindungsgemäßen Verfahrens einerseits und für Ergebnisse der Durchführung spezieller Verfahrensschritte des erfindungsgemäßen Verfahrens andererseits gezeigt und erläutert.

Es zeigen
- Fig. 1: den Aufbau einer Spritzgießmaschine aus ihren einzelnen Maschineneinheiten - sowohl die Gesamtmaschine als auch ihre Maschineneinheiten als Mittel zur Aus- führung des erfindungsgemäßen Verfahrens - in vereinfachter, schematischer Form;
- Fig. 2: das qualitativ dargestellte Ergebnis der Synchronisierung eines Maschinenzyklus einer Spritzgießmaschine ohne Kernzug als Verfahrensschritt des erfindungsgemäßen Verfahrens und
- Fig. 3: das qualitativ dargestellte Ergebnis einer Konfigurationsänderung des Gesamtmaschinenablaufes der Spritzgießmaschine gemäß Fig. 2 durch Erweiterung der Menge ihrer Maschineneinheiten durch einen Kernzug und Anpassung sowohl der Menge ihrer Teilmaschinenabläufe als auch deren Synchronisierung und Parametrierung als Verfahrensschritte des erfindungsgemäßen Verfahrens.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

In Fig. 1 ist der Aufbau einer programmgesteuerten Spritzgießmaschine 1 aus ihren einzelnen Maschineneinheiten in vereinfachter und schematischer Form dargestellt, wie sowohl sie als Gesamtmaschine als auch ihre einzelnen Maschineneinheiten in einzelnen Ansprüchen als konkrete Mittel zur Ausführung des erfindungsgemäßen Verfahrens beschrieben sind und wie sie in der kunststoffverarbeitenden Industrie beispielsweise zur Herstellung von Kunststoffteilen aus Duroplasten eingesetzt wird.

Die wesentlichen Funktionsbaugruppen der Spritzgießmaschine 1 sind eine Spritzeinheit 2, eine Schließeinheit 3, ein Maschinenbett 4 mit Aufspannplatten 5 zur Einspannung einer Form an deren Platz 6 und schließlich ein Antriebs- und Steuersystem 7 mit einem Steuerpult 8 als Benutzerschnittstelle. Die Spritzeinheit 2 umfasst als Komponenten ein Schneckenaggregat 9, einen Trichter 10 sowie einen Einfüllstutzen 11, wobei sich das Schneckenaggregat 9 wiederum aus einem Zylinder mit einer Schnecke 12, Heizbändem 13 und einer Düse 14 als Teilkomponenten zusammensetzt. Die Schließeinheit 3 umfasst zumindest einen Kniehebel 15, eine Hydraulikleitung 16, einen Auswerfer 17 sowie eine Form 18 als einzelne Komponenten.

Aus diesen Maschinenkomponenten wurden für die Anwendung des erfindungsgemäßen Verfahrens zur Erzielung des Synchronisierungsergebnisses gemäß Fig. 2 folgende Maschineneinheiten herausgegriffen oder durch Zusammenfassung gebildet: die Form 18, dargestellt durch ein Symbol 19, der Auswerfer 17, dargestellt durch ein Symbol 20, das Schneckenaggregat 9, dargestellt durch ein Symbol 21, das System der Schnecke 12 samt einem Antriebsteilaggregat für die Materialförderung und Plastifizierung, dargestellt durch ein Symbol 22 sowie das System der Schnecke 12 samt einem Antriebsteilaggregat für den Einspritzvorgang, dargestellt durch ein Symbol 23.

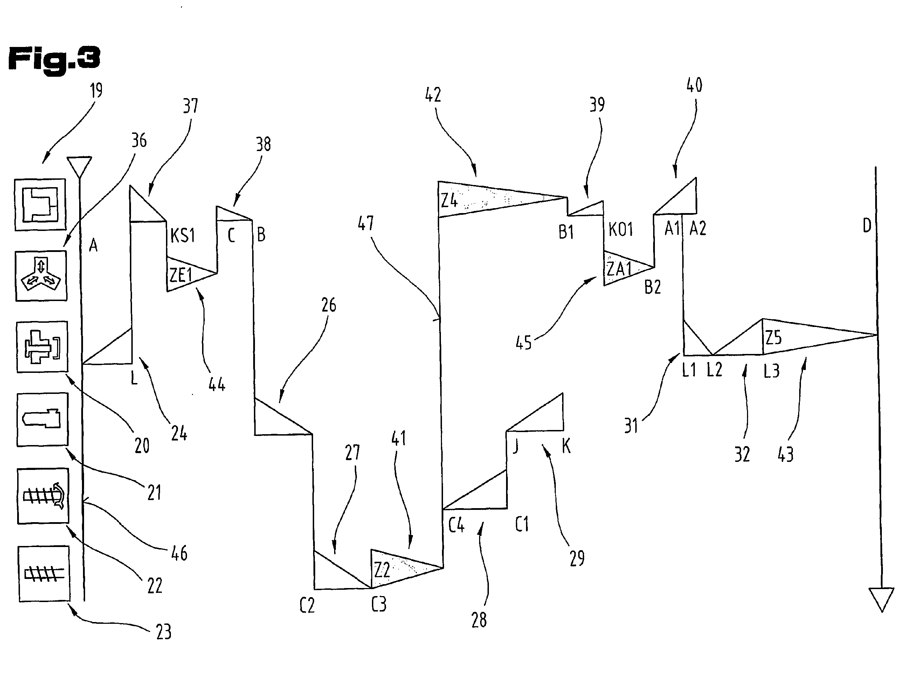

Unter Beachtung des Inhaltes der Verfahrensansprüche, der vorstehenden Erläuterungen hiezu und des Hinweises; dass in Fig. 2 - übrigens auch in Fig. 3 - nicht die dargestellten Anknüpfungspunkte, sondern die zugeordneten Synchronisierungszeitpunkte bezeichnet sind, erkennt man in Fig. 2 folgende beispielhafte Teilmaschinenabläufe in erfindungsgemäß übersichtlicher zeitlicher Einordnung entlang der Ablaufzeitachse: eine am Anfang des Maschinenzyklus stehende Rückwärtsbewegung 24 des Auswerfers 17 mit einem Anfangs- bzw. Endzeitpunkt A bzw. L, einen Schließvorgang 25 der Form 18 durch Vorwärtsbewegung ihres beweglichen Teils mit einem Anfangs- bzw. Endzeitpunkt L bzw. B, eine Vorwärtsbewegung 26 des Schneckenaggregates 9 zum Anpressen der Düse 14 an den Einspritzkanal der Form 18 mit einem Anfangs- bzw. Endzeitpunkt B bzw. C2, eine Vorwärtsbewegung 27 der Schnecke 12 zum Einspritzen des plastifizierten Kunststoffes mit einem Anfangs- bzw. Endzeitpunkt C2 bzw. C3, eine Phase 41 des Nachdruckes in Vorwärtsrichtung als prozessbedingte Wartezeit mit einem Anfangs- bzw. Endzeitpunkt C3 bzw. C4, eine durch das Aufdosieren bedingte Rückwärtsbewegung 28 der Schnecke 12 mit einem Anfangs- bzw. Endzeitpunkt C4 bzw. C1, eine Rückwärtsbewegung 29 des gesamten Schneckenaggregates 9 zum Dekomprimieren und Absetzen der Düse 14 mit einem Anfangs- bzw. Endzeitpunkt J bzw. K, eine zu den beiden letztgenannten Teilmaschinenabläufen überlappend nebenläufige Kühlzeit 42 als prozessbedingte Wartezeit mit einem Anfangs- bzw. Endzeitpunkt C4 bzw. B1, ein Öffnen 30 der Form 18 durch eine Rückwärtsbewegung ihres beweglichen Teils mit einem Anfangs- bzw. Endzeitpunkt B1 bzw. A2 und einem innerhalb des offenen Ablaufzeitintervalls liegenden Synchronisationszeitpunlct A1 für den Start einer Vorwärtsbewegung 31 eines ersten Hubes des Auswerfers 17 mit einem Anfangs- bzw. Endzeitpunkt L1 bzw. L2, eine Rückwärtsbewegung 32 des ersten Hubes des Auswerfers 17 mit einem Anfangs- bzw. Endzeitpunkt L2 bzw. L3, eine Vorwärtsbewegung 33 eines zweiten Hubes des Auswerfers 17 mit einem Anfangs- bzw. Endzeitpunkt L3 bzw. L4, eine Rückwärtsbewegung 34 des zweiten Hubes des Auswerfers 17 mit einem Anfangs- bzw. Endzeitpunkt L4 bzw. L5 sowie eine prozessbedingte zwischenzyklische Wartezeit 43 mit einem Anfangs- bzw. Endzeitpunkt L5 bzw. D. Die Höhen der rechtwinkeligen Dreiecke stellen in dieser Darstellung zurückgelegte Wegstrecken jeweils eines bestimmten Bezugspunktes der zugeordneten Maschineneinheiten dar.

In Fig. 3 ist eine weitere und gegebenenfalls für sich eigenständige Ausführungsform eines Ablaufdiagramms als Mittel zur Durchführung des erfindungsgemäßen Verfahrens gezeigt, wobei wiederum für gleiche Teile gleiche Bezugszeichen bzw. Bauteilbezeichnungen wie in Fig. 2 verwendet werden. Um unnötige Wiederholungen zu vermeiden, wird auf die detaillierte Beschreibung in Fig. 1 und Fig. 2 hingewiesen bzw. Bezug genommen.

Gegenüber Fig. 2 sind nun deutliche Änderungen der Konfiguration des Gesamtmaschinenablaufes der Spritzgießmaschine einschließlich ihres Aufbaues aus einzelnen Maschineneinheiten und Teilmaschinenabläufen sowie deren Synchronisierung und Parametrierung im Ablaufdiagramm als Ergebnis der Ausführung der entsprechenden Verfahrensschritte des erfindungsgemäßen Verfahrens festzustellen. Die Menge aller am Gesamtmaschinenablauf beteiligten Maschineneinheiten wurde durch einen Kernzug 35 mit Darstellung durch das Symbol 36 erweitert, die Menge aller Teilmaschinenabläufe einerseits durch Aufspaltung des Schließ- bzw. Öffnungsvorganges der Form 18 in zwei Teilvorgänge, nämlich in einen Haupt- und Dichtschließvorgang bzw. Vor- und Vollöffnungsvorgang der Form 18 mit Darstellung durch die entsprechenden Symbole 37 und 38 bzw. 39 und 40 erweitert, andererseits aber auch durch Weglassung der Vorwärtsbewegung 33 und Rückwärtsbewegung 34 des zweiten Hubes des Auswerfers reduziert. Qualitativ deutlich erkennbar sind auch die Unterschiede der in Richtung der Maschinensystemachse dargestellten Öffnungs- bzw. Schließwege zwischen dem Haupt- und Dichtschließvorgang bzw. dem Vor- und Vollöffnungsvorgang in der Darstellung durch die entsprechenden Symbole 37 und 38 bzw. 39 und 40 sowie die erforderlichen Anpassungen der Ablaufdauem einzelner Teilmaschinenabläufe. Die Liste der Teilmaschinenabläufe nach der Konfigurationsänderung umfasst nun die am Anfang des Maschinenzyklus stehende Rückwärtsbewegung 24 des Auswerfers 17 mit dem Anfangs- bzw. Endzeitpunkt A bzw. L, den Hauptschließvorgang 37 der Form 18 durch Vorwärtsbewegung ihres beweglichen Teils mit dem Anfangs- bzw. Endzeitpunkt L bzw. KS1 und langem Schließweg, ein als prozessbedingte Wartezeit eingetragenes Einfahren 44 des Kernzuges 35 mit dem Anfangs- bzw. Endzeitpunkt KS1 bzw. C, den Dichtschließvorgang 38 der Form 18 durch Vorwärtsbewegung ihres beweglichen Teils mit dem Anfangs- bzw. Endzeitpunkt C bzw. B und kurzem Schließweg, die Vorwärtsbewegung 26 des Schneckenaggregates 9 mit dem Anfangs- bzw. Endzeitpunkt B bzw. C2 zum Anpressen der Düse 14 an den Einspritzkanal der Form 18, die Vorwärtsbewegung 27 der Schnecke 12 zum Einspritzen des plastifizierten Kunststoffes mit dem Anfangs- bzw. Endzeitpunkt C2 bzw. C3, die Phase 41 des Nachdruckes in Vorwärtsrichtung als prozessbedingte Wartezeit, mit dem Anfangs- bzw. Endzeitpunkt C3 bzw. C4, die durch das Aufdosieren bedingte Rückbewegung 28 der Schnecke 12 mit dem Anfangs-bzw. Endzeitpunkt C4 bzw. C1; die Rückwärtsbewegung 29 des gesamten Schneckenaggregates 9 mit dem Anfangs- bzw. Endzeitpunkt J bzw. K zum Dekomprimieren und Absetzen der Düse 14, die zu den beiden letztgenannten Teilmaschinenabläufen überlappend nebenläufige Kühlzeit 42 als prozessbedingte Wartezeit mit dem Anfangs- bzw. Endzeitpunkt C4 bzw. B1, einen Voröffnungsvorgang 39 der Form 18 durch eine Rückbewegung ihres beweglichen Teils mit dem Anfangs- bzw. Endzeitpunkt B1 bzw. K01 und kurzem Öffnungsweg, ein als prozessbedingte Wartezeit 45 eingetragenes Ausfahren des Kernzuges 35 mit dem Anfangs- bzw. Endzeitpunkt K01 bzw. B2, einen Vollöffnungsvorgang 40 der Form 18 durch eine Rückwärtsbewegung ihres beweglichen Teils mit einem Anfangs- bzw. Endzeitpunkt B2 bzw. A2 mit langem Öffnungsweg und einem innerhalb des offenen Ablaufzeitintervalls liegenden Synchronisationszeitpunkt A1 für den Start der Vorwärtsbewegung 31 eines Hubes des Auswerfers 17 mit einem Anfangs- bzw. Endzeitpunkt L1 bzw. L2, die Rückwärtsbewegung 32 dieses Hubes des Auswerfers 17 mit einem Anfangs- bzw. Endzeitpunkt L2 bzw. L3 sowie die prozessbedingte zwischenzyklische Wartezeit 43 mit einem Anfangs- bzw. Endzeitpunkt L3 bzw. D.

Die weiter oben genau beschriebenen Vorteile des erfindungsgemäßen Verfahrens zumindest hinsichtlich der allgemeinen Ausgestaltung des Ablaufdiagramms gehen aus Fig. 2 und Fig. 3 ohne weitere Erläuterungen unmittelbar hervor. Von den beiden Achsen des Ablaufdiagramms ist in diesen Ausführungsbeispielen die Ablaufzeitachse nicht dargestellt, also gedanklich zu ergänzen, die Maschinensystemachse 46 ist im Gegensatz dazu jedoch visualisiert. Man sieht, dass die Darstellung z.B. der Synchronisierungslinie 47 zumindest für die Überwachung von Gesamtmaschinenabläufen durch den Benutzer dringend zu empfehlen ist.

Die Ausführungsbeispiele Fig. 1 bzw. Fig. 2 und Fig. 3 zeigen mögliche Ausführungsvarianten einer Spritzgießmaschine bzw. der Ausbildung des Ablaufdiagramms als Mittel zur Durchführung des erfindungsgemäßen Verfahrens, wobei an dieser Stelle bemerkt sei, dass die Mittel zur Durchführung des erfindungsgemäßen Verfahrens nicht auf die speziell dargestellten Ausführungsvarianten derselben eingeschränkt sind, sondern vielmehr auch diverse Kombinationen der einzelnen Ausführungsvarianten untereinander möglich sind und diese Variationsmöglichkeit aufgrund der Lehre zum technischen Handeln durch die gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst.

Der Ordnung halber sei abschließend darauf hingewiesen, dass zum besseren Verständnis des Aufbaus einer Spritzgießmaschine und des Ablaufdiagramms als Mittel zur Durchführung des erfindungsgemäßen Verfahrens diese bzw. deren Bestandteile teilweise unmaßstäblich und/oder vergrößert und/oder verkleinert dargestellt wurden.

Vor allem können die einzelnen in Fig. 2 und Fig. 3 gezeigten Ausführungen den Gegen-stand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Spritzgießmaschine
- 2: Spritzeinheit
- 3: Schließeinheit
- 4: Maschinenbett
- 5: Aufspannplatten

- 6: Platz für Form
- 7: Antriebs- und Steuersystem
- 8: Steuerpult
- 9: Schneckenaggregat
- 10: Trichter

- 11: Einfüllstutzen
- 12: Schnecke
- 13: Heizbänder
- 14: Düse
- 15: Kniehebel

- 16: Hydraulikleitung
- 17: Auswerfer
- 18: Form
- 19: Symbol für Form
- 20: Symbol für Auswerfer

- 21: Symbol für Schneckenaggregat
- 22.: Symbol für Plastifizierungssystem
- 23: Symbol für Einspritzsystem
- 24: Sicherheitsrückbewegung Auswerfer
- 25: Gesamtschließung der Form

- 26: Anpressen des Schneckenaggregates
- 27: Einspritzen
- 28: Aufdosieren
- 29: Dekomprimieren und Absetzen
- 30: Gesamtöffnung der Form

- 31: 1. Hub vorwärts des Auswerfers
- 32: 1. Hub rückwärts des Auswerfers
- 33: 2. Hub vorwärts des Auswerfers
- 34: 2. Hub rückwärts des Auswerfers
- 35: Kernzug

- 36: Symbol für Kernzug
- 37: Hauptschließung der Form
- 38: Dichtschließung der Form
- 39: Voröffnung der Form
- 40: Vollöffnung der Form

- 41: Nachdruckphase
- 42: Kühlzeit
- 43: zwischenzyklische Wartezeit
- 44: Einfahren des Kernzuges
- 45: Ausfahren des Kernzuges

- 46: Maschinensystemachse
- 47: Synchronisationslinie

## Patentansprüche

1. Verfahren zur benutzerseitig durch einen Grafikeditor unterstützten Erstellung, Änderung, Überwachung und/oder Optimierung des Gesamtmaschinenablaufes einer programmgesteuerten Maschine oder Anlage, welche Maschine oder Anlage in eine Mehrzahl steuerungstechnisch eigenständig aktivierbarer Maschineneinheiten unterteilt ist, welchen Maschineneinheiten jeweils eine Menge vorbestimmter Teilmaschinenabläufe zugeordnet ist, von denen zumindest ein Teilmaschinenablauf parametrierbar ist, wobei der Grafikeditor auf jeden Teilmaschinenablauf über ein grafisches Ablaufsymbol Bezug nimmt, für jeden Teilmaschinenablauf zumindest ein Synchrenisierungszeitpunkt bestimmt wird und der Benutzer den Gesamtmaschinenablauf durch Auswahl einer Teilmenge aller für die programmgesteuerte Maschine oder Anlage vorbestimmten Teilmaschinenabläufe sowie durch Verknüpfung von Synchronisationszeitpunkten dieser Teilmaschinenabläufe festlegt, wobei zumindest ein Teil der Steuersignale für den Betrieb der programmgesteuerten Maschine oder Anlage aus einem durch den Grafikeditor zur Durchführung der Konfigurationseinstellungen und von Überwachungsaufgaben durch den Benutzer bereitgestellten Ablaufdiagramm abgeleitet wird, welches Ablaufdiagramm eine zweidimensionale Diagrammfläche mit einer gedachten oder visualisierten Maschinensystemachse entsprechend einer Maschinenkomponentendimension und mit einer gedachten oder visualisierten Ablaufzeitachse entsprechend einer Zeitdimension umfasst, in welche Diagrammfläche alle am Gesamtmaschinenablauf beteiligten Teilmaschinenabläufe durch vollautomatisierte oder benutzerinitiiert teilautomatisierte Positionierung der zugeordneten Ablaufsymbole eingetragen werden und/oder von welcher Ablaufsymbole nicht benötigter Teilmaschinenabläufe wieder entfernt werden können, wobei jedes Ablaufsymbol wenigstens einen dem zumindest einen Synchronisationszeitpunkt des repräsentierten Teilmaschinenablaufes entsprechenden Anknüpfungspunkt sowie im Fall der Bestimmung weiterer Synchronisadonszeitpunkte des repräsentierten Teilmaschinenablaufes für jeden dieser Synchronisationszeitpunkte mindestens einen weiteren Anknüpfungspunkt umfasst, welche Anknüpfungspunkte jeweils über eine zur Maschinensystemachse parallele Synchronisationslinie mit einem Anknüpfungspunkt eines Teilmaschinenablaufes derselben Maschineneinheit und/oder einer weiteren Maschineneinheit verbunden sind, und die Ablaufsymbole auf der Diagrammfläche durch den Grafikeditor so positioniert oder repositioniert werden, dass sie in der Maschinenkomponentendimension entsprechend ihrer Zugehörigkeit zu einer Maschineneinheit und in der Zeitdimension entsprechend der Synchronisierung ihrer zugehörigen
Teilmaschinenabläufe mit weiteren Teilmaschinenabläufen derselben Maschineneinheit oder mit Teilmaschinenabläufen weiterer Maschineneinheiten angeordnet sind, **dadurch gekennzeichnet, dass** für zumindest einen Teilmaschinenablauf eine zweiwertige Ablaufoption, insbesondere die Auswahl einer Maschinenbewegung oder deren Gegenbewegung, durch die Möglichkeit der Orientierung des zugehörigen Ablaufsymbols in jede der beiden entgegengesetzten Richtungen parallel zur Ablaufzeitachse visualisiert wird, wobei jedes Ablaufsymbol solch eines Paares von Ablaufsymbolen aus dem jeweils anderen insbesondere durch Spiegelung an einer zur Maschinensystemachse parallelen Spiegelungsachse erzeugt wird.

2. Verfahren nach Anspruch 1, **dadurch gekennzeichnet, dass** die Menge der Teilmaschinenabläufe prozessbedingte, einstellbare Wartezeiten umfasst.

3. Verfahren nach einem der vorhergehenden Ansprüche, **dadurch gekennzeichnet, dass** sich der Benutzer in einem speziellen Betriebsmodus, etwa nach Auswahl des Betriebsmodus "Programmierung" mit Hilfe eines Betriebsartenwahlschalters, durch Anwählen der Maschinensystemachse oder eines ihr eindeutig zugeordneten, insbesondere mit ihr verbundenen Symbols im Fall einer zuvor bestätigten, im vorgesehenen Betriebsmodus durchgeführten Auswahl eines Satzes von Maschineneinheiten aus einem Katalog des Grafikeditors für eine vollautomatisierte Konfigurierung des entsprechenden Gesamtmaschinenablaufes entscheidet, der Grafikeditor in diesem Fall die Eintragung der zu den Maschineneinheiten der aus dem Katalog entnommenen Konfiguration gehörenden Symbole an der Maschinensystemachse durchführt, eine Standardauswahl aus den Teilmaschinenabläufen dieser Maschineneinheiten trifft, diese vollautomatisch unter Verwendung von Standardeinstellungen synchronisiert, parametriert, die zugehörigen Ablaufsymbole in die Diagrammfläche des Ablaufdiagramms einträgt und so die Bereitschaft zur Übertragung der Konfigurationsdaten in einen Ablaufprogrammspeicher der Maschinensteuerung und zum Start des Gesamtmaschinenablaufes etwa durch Einstellung eines Betriebsartenwahlschalters auf einen der beiden Betriebsmodi "Automatik" oder "Halbautomatik" herstellt, dass der Grafikeditor im Gegensatz dazu bei Anwählen der Maschinensystemachse oder eines ihr eindeutig zugeordneten Symbols in einem speziellen Betriebsmodus, etwa im Betriebsmodus "Programmierung", ohne vorherigen benutzerseitigen Zugriff auf einen Katalog dem Benutzer in einem Menü die Liste aller bereits abgespeicherten Konfigurationen von Gesamtmaschinenabläufen zur Auswahl einer dieser Konfigurationen präsentiert und der Benutzer nach deren Auswahl die Entscheidung fällt, entweder die Daten dieser Konfiguration beispielsweise durch Einstellung eines Betriebsartenwahlschalters auf einen der beiden Betriebsmodi "Automatik" oder "Halbautomatik" unverändert in den Ablaufprogrammspeicher der Maschinensteuerung zu übertragen und den anschließenden Start des Gesamtmaschinenablaufes zu veranlassen oder sie zuvor teilautomatisiert zu ändern, und dass der Grafikeditor eine teilautomatisierte Änderung einer abgespeicherten Konfiguration eines Gesamtmaschinenablaufes oder eine teilautomatisierte Konfigurierung eines neu aus dem Katalog zusammengestellten Gesamtmaschinenablaufes einleitet, wenn der Benutzer zumindest eines der an der Maschinensystemachse angeordneten Symbole für eine Maschineneinheit anwählt.

4. Verfahren nach einem der vorhergehenden Ansprüche, **dadurch gekennzeichnet, dass** bei einer teilautomatisierten Konfigurierung eines Gesamtmaschinenablaufes der Benutzer einen zu diesem Gesamtmaschinenablauf hinzuzufügenden Teilmaschinenablauf aus einem von gegebenenfalls mehreren Menüs oder Auswahlfeldern des Grafikeditors auswählt, wobei dieses Menü oder Auswahlfeld eine Menge von für eine bestimmte Maschineneinheit verfügbaren und verwendbaren Teilmaschinenabläufen zur Auswahl anbietet und durch Anwählen des Symbols für diese Maschineneinheit an der Maschinensystemachse des Ablaufdiagramms aufgerufen wird, der Grafikeditor alle für den ausgewählten Teilmaschinenablauf zur Festlegung der Synchronisierung zulässigen Synchronisierungslinien und Anknüpfungspunkte von Ablaufsymbolen des vorbestehenden Gesamtmaschinenablaufes in der Diagrammfläche darstellt, daraufhin der Benutzer mit der Anwahl eines dargestellten Anknüpfungspunktes oder einer dargestellten Synchronisierungslinie oder der Maschinensystemachse die zeitliche Synchronisierung des ausgewählten Teilmaschinenablaufes mit dem vorbestehenden Gesamtmaschinenablauf festlegt, und der Grafikeditor anschließend das Ablaufsymbol des ausgewählten Teilmaschinenablaufes auf der Diagrammfläche so positioniert, dass es in der Maschinenkomponentendimension entsprechend seiner Zugehörigkeit zu einer Maschineneinheit und in der Zeitdimension entsprechend seiner Synchronisierung mit weiteren Teilmaschinenabläufen des Gesamtmaschinenablaufes angeordnet ist.

5. Verfahren nach Anspruch 4, **dadurch gekennzeichnet, dass** bei Auswahl eines reversiblen Teilmaschinenablaufes oder eines Teilmaschinenablaufes mit zweiwertiger Ablaufoption durch den Benutzer, insbesondere einer linearen Bewegung eines Maschinenteiles, der Grafikeditor zusätzlich automatisch den komplementären Teilmaschinenablauf oder einen
ergänzenden Teilmaschinenablauf zur Rückführung der betroffenen Maschineneinheit in eine definierte Grundstellung auswählt und alle für die komplementären oder ergänzenden Teilmaschinenabläufe zur Festlegung der Synchronisierung zulässigen Synchronisierungslinien und Anknüpfungspunkte von Ablaufsymbolen des vorbestehenden Gesamtmaschinenablaufes mit Kennzeichnung der Zuordnung jeder Synchronisierungslinie und jedes Anknüpfungspunktes zu einem der komplementären oder ergänzenden Teilmaschinenabläufe zur folgenden Synchronisierung der komplementären oder ergänzenden Teilmaschinenabläufe mit dem vorbestehenden Gesamtmaschinenablauf in der Diagrammfläche darstellt.

6. Verfahren nach Anspruch 4, **dadurch gekennzeichnet, dass** nach einem bestätigten Abschluss einer manuellen Synchronisierung nur einer Teilmenge aller Teilmaschinenabläufe eines Gesamtmaschinenablaufes durch den Benutzer der Grafikeditor oder ein durch diesen aufgerufenes Unterprogramm die restlichen ausgewählten Teilmaschinenabläufe vollautomatisch zu den manuell synchronisierten Teilmaschinenabläufen synchronisiert und das Ablaufdiagramm durch Eintragung der zu diesen vollautomatisch synchronisierten Teilmaschinenabläufen gehörenden Ablaufsymbole vervollständigt.

7. Verfahren nach einem der Ansprüche 4 bis 6, **dadurch gekennzeichnet, dass** eine grafische Darstellung durch Synchronisierungslinien oder Anknüpfungspunkte oder eine zusätzliche tabellarische Darstellung zumindest eines Teils aller im Zuge des Aufbaues des Ablaufdiagramms bereits eingetragenen Synchronisierungszeitpunkte durch symbolische oder verbale Zusatzeinträge in der Diagrammebene oder in einem darin eingeblendeten Fenster zur Unterstützung der benutzerseitigen Auswahl technisch erläutert ist.

8. Verfahren nach einem der vorhergehenden Ansprüche, **dadurch gekennzeichnet, dass** die grafischen Ablaufsymbole mit einer zeitmaßstabsgerecht der Ablaufdauer entsprechenden Erstreckung in Richtung der Ablaufzeitachse in das Ablaufdiagramm eingetragen werden.

9. Verfahren nach einem der vorhergehenden Ansprüche, **dadurch gekennzeichnet, dass** die Maschinensystemachse des Ablaufdiagramms zusätzlich zu der durchgehenden Maschinenkomponentendimension noch weitere, achsenabschnittsweise unterschiedliche und insbesondere physikalische Dimensionen darstellt und die grafischen Ablaufsymbole dementsprechend mit den einzelnen Maschineneinheiten zugeordneten, im allgemeinen unterschiedlichen Parametermaßstäben entsprechender Erstreckung, insbesondere mit wegmaßstabsgerechter oder geschwindigkeits- oder drehzahlmaßstabsgerechter oder beschleunigungs- oder winkelbeschleunigungsmaßstabsgerechter oder impuls- oder drehimpulsmaßstabsgerechter oder kraftmaßstabsgerechter oder druckmaßstabsgerechter oder massenmaßstabsgerechter oder leistungsmaßstabsgerechter oder lärmmaßstabsgerechter Erstreckung in Richtung der Maschinensystemachse in das Ablaufdiagramm eingetragen werden.

10. Verfahren nach einem der Ansprüche 8 oder 9, **dadurch gekennzeichnet, dass** zumindest ein grafisches Ablaufsymbol mit einer so bemessenen Erstreckung in Richtung der Ablaufzeitachse in das Ablaufdiagramm eingetragen wird, dass je zwei rechnerisch als technisch zulässig ermittelte, unmittelbar benachbarte grafische Anknüpfungselemente, also entweder Anknüpfungspunkte oder Synchronisierungslinien, ungeachtet ihrer tatsächlichen praxisgerecht zur Anwahl durch den Benutzer ausgestalteten Darstellung im Ablaufdiagramm einen vorgegebenen Mindestabstand einhalten sowie dass zu diesem Zweck erforderlichenfalls zumindest partiell komprimierende und/oder streckende Skalierungen der Ablaufzeitachse in das Ablaufdiagramm eingeführt werden.

11. Verfahren nach einem der vorhergehenden Ansprüche, **dadurch gekennzeichnet, dass** zu jedem Zeitpunkt für jede Maschineneinheit jeweils genau ein zugeordneter Teilmaschinenablauf zur Ausführung festgelegt wird.

12. Verfahren nach einem der vorhergehenden Ansprüche, **dadurch gekennzeichnet, dass** die Parametrierung eines Teilmaschinenablaufes einer Maschineneinheit im Verlauf einer teilautomatisierten Konfigurierung des Gesamtmaschinenablaufes derart erfolgt, dass sich durch Anwahl des diesem Teilmaschinenablauf zugeordneten, bereits in das Ablaufdiagramm eingetragenen Ablaufsymbols durch den Benutzer ein Eingabe- bzw. Auswahlmenü öffnet, anhand dessen der Benutzer Parameterwerte eingibt bzw. parametrische Einstelloptionen auswählt.

13. Verfahren nach einem der vorhergehenden Ansprüche, **dadurch gekennzeichnet, dass** beim Eintragen eines Ablaufsymbols für einen parametrierbaren Teilmaschinenablauf in die Diagrammfläche dessen Parameter vom Editor mit definierten oder berechneten Defaultwerten oder typischen Vorzugswerten initialisiert werden, welche vom Benutzer durch anschließende Parametereingaben selektiv veränderbar sind.

14. Verfahren nach einem der vorhergehenden Ansprüche, **dadurch gekennzeichnet, dass** eine Überwachung von Parametern, insbesondere wenn im Ablaufdiagramm mehrere hinsichtlich ihrer physikalischen Dimension unterschiedliche Parameterwerte zumindest eines Teilmaschinenablaufes einer Maschineneinheit zu visualisieren sind, durch Ausgabe von Werten für diese Parameter in unmittelbarer örtlicher Nachbarschaft der Ablaufsymbole dieser Teilmaschinenabläufe unterstützt wird.

15. Verfahren nach einem der vorhergehenden Ansprüche, **dadurch gekennzeichnet, dass** der Grafik-Editor oder ein von ihm aufgerufenes Unterprogramm den Gesamtmaschinenablauf auf unerwünschte Maschinenzyklus-Verzögerungszeiten überwacht, bei Aufdeckung solcher Maschinenzyklus-Verzögerungszeiten eine den Gesamtmaschinenablauf oder eine Gruppe von Teilmaschinenabläufen oder auch nur einen einzigen Teilmaschinenablauf erfassende Optimierungsrechnung veranlasst und dem Benutzer im Ablaufdiagramm zusammen mit einer diesbezüglichen Fundmeldung Vorschläge zur Optimierung von Parametern bestimmter Teilmaschinenabläufe in grafischer und/oder tabellarischer Form unterbreitet.

16. Verfahren nach einem der vorhergehenden Ansprüche, **dadurch gekennzeichnet, dass** als Parameter der Teilmaschinenabläufe Dosieren und/oder Einspritzen und/oder Nachdruck und/oder Kühlvorgang und/oder Entformung im Rahmen des Gesamtmaschinenablaufes einer Spritzgussmaschine die physikalischen Größen Zylindertemperatur, Schneckenumdrehungszahl und -geschwindigkeit, Staudruck, Dosierzeit und Schneckenrückzug, Einspritzgeschwindigkeit, Einspritzdruck und Einspritzzeit, Nachdruckhöhe und Nachdruckzeit, Kühlzeit und/oder Öffnungskraft und Auswerkraft maßgeblich sind.

17. Verfahren nach einem der vorhergehenden Ansprüche, **dadurch gekennzeichnet, dass** die gedachte oder visualisierte Maschinensystemachse und die gedachte oder visualisierte Ablaufzeitachse einen rechten Winkel einschließen.

18. Verfahren nach einem der Ansprüche 2 bis 17, **dadurch gekennzeichnet, dass** die prozessbedingten Wartezeiten jeweils durch das Ablaufsymbol eines gefüllten gleichschenkeligen Dreieckes und zumindest jene Teilmaschinenabläufe, für welche eine zweiwertige Ablaufoption definiert ist, und die restlichen Teilmaschinenabläufe jeweils durch das Ablaufsymbol eines leeren rechtwinkeligen Dreieckes mit Erstreckung entsprechend der Ablaufdauer parallel zur Ablaufzeitachse und/oder Erstreckung entsprechend einem Parameter, insbesondere einer zurückgelegten Wegstrecke, einer Geschwindigkeit, einer Drehzahl oder Kreisfrequenz, einer Beschleunigung, einer Winkelbeschleunigung, einem Impuls, einem Drehimpuls, einer Kraft, einem Druck, einer Masse, einer elektrischen Leistung, insbesondere einer Heizleistung, und/oder einem Lärmmaß in Richtung der Maschinensystemachse und mit Orientierung durch eine Dreiecksspitze in Richtung oder Gegenrichtung der Ablaufzeitachse visualisiert werden.

19. Verfahren nach einem der vorhergehenden Ansprüche, **dadurch gekennzeichnet, dass** der Gesamtmaschinenablauf durch Aufruf einer zumindest einem Ablaufsymbol in zumindest einer hierarchisch tiefer liegenden Ebene hinterlegten Ablaufstruktur mit gleichartig gestalteten, benutzerseitig gleichartig manipulierbaren und sich gleichartig verhaltenden Ablaufsymbolen verfeinert werden kann.

20. Verfahren nach einem der vorhergehenden Ansprüche, **dadurch gekennzeichnet, dass** mindestens eine benutzerseitige Eingabe einer Plausibilitätsüberprüfung unterzogen wird und bei Unzulässigkeit eines Eingabewertes dieser durch den Grafikeditor nochmals angefordert wird und/oder in einem in das Ablaufdiagramm eingeblendeten Fenster eine Fehlermeldung ausgegeben wird, sowie dass Verfahrensfehler und/oder technisches Versagen einzelner Maschineneinheiten der programmgesteuerten Maschine oder Anlage in ähnlicher Weise durch Fehlermeldungen angezeigt werden.

21. Verfahren nach einem der vorhergehenden Ansprüche, **dadurch gekennzeichnet, dass** der Gesamtmaschinenablauf durch einen Maschinenzyklus oder eine Folge mehrerer Maschinenzyklen eines Spritzgießverfahrens und die typischen Teilmaschinenabläufe eines Maschinenzyklus mit eingeklammerten typischen Ablaufdauern durch die Prozessschritte "Auswerfer zurück", "Form schließen (1s)", "Schneckenaggregat vor (0.8s)", "Einspritzen (2s)", "Nachdruckphase (7s)", "Dosierung mit Beginn der Plastifizierung (4s)" und "Schneckenentlastung und Schneckenaggregat zurück (1.2s)" während der Abkühlung des Spritzlings, "Form öffnen (0.8s)", "Auswerfer vor und zurück (1s); mehrere Hübe möglich" sowie "zwischenzyklisches Warten (26.8s)" repräsentiert werden.

22. Vorrichtung zur Erstellung, Änderung, Überwachung und/oder Optimierung des Gesamtmaschinenablaufes einer programmgesteuerten Maschine oder Anlage, welche Mittel zur Umsetzung des Verfahrens nach den Ansprüchen 1 bis 21 und Mittel zur benutzerseitigen Eingabe von Konfigurationsdaten, elektronischen Datenverarbeitung, Ausgabe durch grafische Visualisierung und Übertragung von Konfigurationsdaten an die programmgesteuerte Maschine oder Anlage in für die Konfigurierung geeigneten Betriebszuständen dieser Maschine oder Anlage umfasst.

23. Vorrichtung nach Anspruch 22, **dadurch gekennzeichnet, dass** sie einen integrierten Online-Grafikeditor umfasst, welcher an eine Echtzeitverarbeitung der Maschinen- oder Anlagensteuerung angekoppelt werden kann.

24. Vorrichtung nach Anspruch 22 oder 23, **dadurch gekennzeichnet, dass** sie einen berührungssensitiven Bildschirm umfasst.

25. Vorrichtung nach einem der Ansprüche 22 bis 24, **dadurch gekennzeichnet, dass** die programmgesteuerte Maschine oder Anlage durch eine Spritzgießmaschine realisiert ist, deren einzelne Maschineneinheiten zu einer Spritzeinheit oder einer Schließeinheit oder einem Maschinenbett mit Aufspannplatten zur Halterung der Form oder zum Antriebs- und Steuerungssystem inklusive Steuerpult gehören.

26. Vorrichtung nach Anspruch 25, **dadurch gekennzeichnet, dass** die Spritzeinheit ein Schneckenaggregat samt Trichter und Einfüllstutzen, welchem ein Zylinder mit Schnecke, Heizbänder und eine Düse angehören, eine Anpresseinheit für die Bewegungen des gesamten Schneckenaggregates in axialer Richtung sowie einen Antrieb für axiale Translationsbewegungen und/oder Rotationsbewegungen der Schnecke umfasst.

## Claims

1. Method enabling a user to create, edit, monitor and/or optimise the overall machine process of a programmable machine or system with the assistance of a graphics editor, which machine or system is sub-divided into a plurality of machine units which can be activated separately for control purposes, the machine units being respectively assigned a number of predefined partial machine processes, for at least one of which partial machine processes parameters can be set, and the graphics editor refers to each partial machine process by means of a graphic process symbol, at least one synchronisation instant is defined for every partial machine process and the user sets up the overall machine process by selecting a partial quantity from all the partial machine processes predefined for the programmable machine or system and linking synchronisation instants of these partial machine processes, and at least some of the control signals for operating the programmable machine or system are derived from a process diagram displayed to the user by the graphics editor to enable the user to run the configuration set-up and monitoring tasks, which process diagram comprises a two-dimensional diagram area with an imaginary or visualised machine system axis corresponding to a machine component dimension and with an imaginary or visualised process time axis corresponding to a time dimension, in which diagram area all of the partial machine processes involved in the overall machine process are plotted by a fully automated or user-initiated, partially automated positioning of the assigned process symbols and/or from which process symbols of partial machine processes that are not needed can be removed again, and every process symbol comprises at least one linking point corresponding to at least one synchronisation instant of the displayed partial machine processes and, when defining other synchronisation instants of the displayed partial machine processes, at least one other linking point for each of these synchronisation instants, which linking points are linked by means of a synchronisation line parallel with the machine system axis to a linking instant of a partial machine process of the same machine unit and/or another machine unit, and the process symbols are positioned or repositioned on the diagram area by the graphics editor so that they are arranged in the machine component dimension corresponding to their assignment to a machine unit and in the time dimension based on the synchronisation of their assigned partial machine processes with other partial machine processes of the same machine unit or with partial machine processes of other machine units, **characterised in that** a two-value process option is displayed for at least one partial machine process, in particular the selection of a machine movement or its opposing movement, due to the possibility of being able to orient the associated process symbol in each of the two opposing directions parallel with the process time axis, and every process symbol of such a pair of process symbols is created from the respective other one, in particular due to a mirror image on an axis in mirror image parallel with the machine system axis.

2. Method as claimed in claim 1, **characterised in that** the number of partial machine processes includes process-related waiting times which can be adjusted.

3. Method as claimed in one of the preceding claims, **characterised in that** the user, in a special operating mode, having selected the "Programming" operating mode with the aid of an operating mode selection switch, decides on a set of machine units selected from a catalogue by the graphics editor by selecting the machine system axis or a symbol unambiguously assigned to it, in particular linked to it, in the case of a selection made and confirmed previously in the operating mode, in order to run a fully automated configuration of the corresponding overall machine process, in which case the graphics editor plots the symbols belonging to the configuration of machine units selected from the catalogue on the machine system axis, applies a standard selection from the partial machine processes of these machine units, synchronises and enters parameters for it on a fully automated basis using standard settings, plots the associated process symbols in the diagram area of the process diagram and thus creates a state of readiness for transferring the configuration data in to a process programme memory of the machine controller and starts the overall machine process by setting an operating mode selection switch to one of the two operating modes "Automatic" or "Semi-automatic", and, by contrast with this, if the machine system axis or a symbol unambiguously assigned to it is selected, the graphics editor displays to the user, without the user first having to access a catalogue, the list of all the configurations of overall machine processes stored in a menu when the "Programming" operating mode is selected in a special operating mode to enable him to select one of these configurations and, having made the selection, the user decides either to transfer the data of this configuration unedited to the process programme memory of the machine controller, for example by setting an operating mode selection switch to one of the two operating modes "Automatic" or "Semi-automatic", and prompt the start-up of the overall machine process, or to edit it beforehand on a partially automated basis, and the graphics editor initiates a partially automated change to a stored configuration of an overall machine process or a partially automated configuration of a new overall machine process compiled from the catalogue if the user selects at least one of the symbols for a machine unit disposed on the machine system axis.

4. Method as claimed in one of the preceding claims, **characterised in that**, during a partially automated configuration of an overall machine process, the user selects a partial machine process from one of optionally several menus or selection fields of the graphics editor which is added to this overall machine process, and this menu or selection field offers a number of partial machine processes for selection, which are available for and can be used by a specific machine unit, and is retrieved on the machine system axis of the process diagram by selecting the symbol for this machine unit, the graphics editor displays all the permissible synchronisation lines and linking instants of process symbols of the pre-existing overall machine process for the selected partial machine process in the diagram area to enable the synchronisation to be set up, after which the user sets the synchronised timing of the selected partial machine process with the pre-existing overall machine process by selecting a displayed linking instant or a displayed synchronisation line or the machine system axis, and the graphics editor then positions the process symbol of the selected partial machine process on the diagram area so that it is arranged in the machine component dimension based on its assignment to a machine unit and in the time dimension based on its synchronisation with other partial machine processes of the overall machine process.

5. Method as claimed in claim 4, **characterised in that**, when a reversible partial machine processes or a partial machine process with a two-value process option is selected by the user, in particular a linear movement of a machine part, the graphics editor additionally automatically selects the complementary partial machine process or a supplementary partial machine process to return the relevant machine unit to a defined base position, and displays in the diagram area all the permissible synchronisation lines and linking instants of process symbols of the pre-existing overall machine process for both of the partial machine processes in order to set the synchronisation and identifies the assignment of every synchronisation line and every linking instant to one of the two partial machine processes so that the two partial machine processes are synchronised with the pre-existing overall machine process.

6. Method as claimed in claim 4, **characterised in that**, when the user has confirmed completion of a manual synchronisation of only a partial quantity of all the partial machine processes of an overall machine process, the graphics editor or a sub-programme called up by it synchronises the rest of the selected partial machine processes with the manually synchronised partial machine processes on a fully automated basis and completes the process diagram by plotting the process symbols belonging to these fully automated, synchronised partial machine processes.

7. Method as claimed in one of claims 4 to 6, **characterised in that** a graphic presentation is technically explained by synchronisation lines or linking instants or an additional tabular presentation of at least some of all of the synchronisation instants already plotted during the course of setting up the process diagram by means of additional symbolic or verbal entries in the diagram level or in a window merged into it in order to assist the selection by the user.

8. Method as claimed in one of the preceding claims, **characterised in that** the graphic process symbols are plotted in the process diagram extending in the direction of the process time axis according to the correct timing of the process duration.

9. Method as claimed in one of the preceding claims, **characterised in that**, in addition to the continuous machine component dimension, the machine system axis of the process diagram also displays other axis portions of different and in particular physical dimensions, and the graphic process symbols are plotted in the diagram in the direction of the machine system axis together with the generally different parameter settings of the corresponding extension assigned to the individual machine units, in particular an extension based on the correct distance or speed or rotation speed or acceleration or angular acceleration or impulse or rotary impulse for force or pressure or mass or performance or noise.

10. Method as claimed in one of claims 8 or 9, **characterised in that** at least one graphic process symbol is plotted in the process diagram extending in the direction of the process time axis, every two immediately adjacent graphic linking elements computed as being technically permissible, in other words either linking instants or synchronisation lines, are maintained at a predefined minimum distance in the process diagram irrespective of their actual, practically correct diagram set up by the user for selection and at least partially compressed and/or extending scales of the process time axis are entered in the process diagram for this purpose if necessary.

11. Method as claimed in one of the preceding claims, **characterised in that** at every instant, precisely one associated partial machine process is set up for a machine unit for implementation.

12. Method as claimed in one of the preceding claims, **characterised in that** the parameters of a partial machine process of a machine unit are set during the course of a partially automated configuration of the overall machine process in such a way that when the user selects the process symbol assigned to this partial machine process already entered in the diagram, an input or selection menu opens, by means of which the user enters parameter values and selects parameter setting options.

13. Method as claimed in one of the preceding claims, **characterised in that** when a process symbol for a partial machine process which can be set up on the basis of parameters is entered in the diagram area, its parameters are initialised by the editor with defined or computed default values or typical preferred values which can be selectively edited by the user by subsequently entering parameters.

14. Method as claimed in one of the preceding claims, **characterised in that** monitoring of parameters is assisted by outputting values for these parameters in the immediate vicinity of the process symbols of these partial machine processes, especially if several parameter values of at least one partial machine process of a machine unit that are different in terms of their physical dimension have to be displayed.

15. Method as claimed in one of the preceding claims, **characterised in that** the graphics editor or a sub-programme called up by it monitors the overall machine process for undesired machine cycle delay times and, on detecting such machine cycle delay times, prompts an optimisation computation covering the overall machine process or a group of partial machine processes or alternatively only a single partial machine process and provides the user with suggestions for optimising parameters of specific partial machine processes in graphic and/or tabular format in the process diagram together with a findings report in this connection.

16. Method as claimed in one of the preceding claims, **characterised in that** parameters of the partial machine processes comprising metering or injecting or after-pressure or a cooling process or de-moulding within the context of the overall machine process of an injection moulding machine typically include the critical physical variables of cylinder temperature, screw rotation speed and velocity, dynamic pressure, metering time and screw retraction or injection speed, injection pressure and injection time or after-pressure level and after-pressure time or cooling time or opening force and ejection force.

17. Method as claimed in one of the preceding claims, **characterised in that** the imaginary or visualised machine system axis and the imaginary or visualised process time axis subtend a aright angle.

18. Method as claimed in one of claims 2 to 17, **characterised in that** the process-related waiting times are respectively displayed by the process symbol of a filled isosceles triangle, and at least those partial machine processes for which a two-value process option has been defined and the rest of the partial machine processes are displayed by the process symbol of an empty right-angled triangle extending parallel with the process time axis corresponding to the process duration and/or extending in the direction of the machine system axis so as to correspond to a parameter, in particular a travelled distance or a speed or a rotation frequency or a circuit frequency or an acceleration or an angular acceleration or an impulse or a rotary impulse or a force or a pressure or a mass or an electric power, in particular a heating power, or a noise measurement, and oriented by a triangle apex in the direction of or opposite direction from the process time axis.

19. Method as claimed in one of the preceding claims, **characterised in that** the overall machine process can be refined by calling up a stored process structure containing at least one process symbol with process symbols of an identical type which can be manipulated by the user in the same way and which behave in the same way disposed on a hierarchically lower level.

20. Method as claimed in one of the preceding claims, **characterised in that** at least one input entered by the user is subjected to a plausibility check and the graphics editor issues a prompt for an input value to be entered again if it is not permissible and/or an error message is output to a window merged into the process diagram, and processing errors and/or technical failure of individual machine units of the programmable machine or system are displayed by means of error messages in the same way.

21. Method as claimed in one of the preceding claims, **characterised in that** the overall machine process is represented by a machine cycle or a series of several machine cycles of an injection moulding process and the typical partial machine processes of a machine cycle are displayed with typical process durations in brackets by the process steps "ejector back", "close mould (1s)", "worm screw unit forward (0.8s)", "inject (2s)", "after-pressure phase (7s)", "meter and start plasticisation (4s)" and "de-pressurise screw and move worm screw unit back (1.2s)" and, during cooling of the moulding, "open mould (0.8s)", "ejector forward and back (1s); several strokes possible" and "wait between cycles (26.8s)".

22. Device for creating, editing, monitoring and/or optimising the overall machine process of a programmable machine or system comprising means for implementing the method as claimed in claims 1 to 21 and means for enabling a user to enter configuration data, electronic data processing, output by graphic display and transfer of configuration data to the programmable machine or system when this machine or system is in appropriate operating modes for configuration purposes.

23. Device as claimed in claim 22, **characterised in that** it has an integrated online -graphics editor which can be coupled with the real time processing system of the machine or system controller.

24. Device as claimed in claim 22 or 23, **characterised in that** it has a touch-sensitive screen.

25. Device as claimed in one of claims 22 to 24, **characterised in that** the programmable machine or system is an injection moulding machine, the individual machine units of which typically belong to an injection unit or a closing unit or a machine bed with clamping plates for retaining the mould or belong to the drive and control system, including the control panel.

26. Device as claimed in claim 25, **characterised in that** the injection unit comprises a worm screw unit incorporating a hopper and filler neck, which belong to a cylinder with a screw, heating belts and a nozzle, an applicator unit for moving the entire worm screw unit in the axial direction and a drive for axial translating movements and/or rotating movements of the screw.

## Revendications

1. Procédé destiné à l'élaboration, la modification, le contrôle et/ou l'optimisation, assistés côté utilisateur par un éditeur graphique, de l'opération globale de machine d'une machine ou d'une installation commandée par programme, laquelle machine ou installation est subdivisée en une pluralité d'unités de machine pouvant être activées de façon indépendante au niveau de la technique de commande, unités de machine à chacune desquelles est attribuée une certaine quantité d'opérations partielles de machine prédéfinies, dont au moins une opération partielle de machine est paramétrable, l'éditeur graphique faisant référence à chaque opération partielle de machine par un symbole d'opération graphique, au moins un moment de synchronisation étant déterminé pour chaque opération partielle de machine et l'utilisateur définissant l'opération globale de machine en sélectionnant une quantité partielle de toutes les opérations partielles de machine prédéfinies pour la machine ou l'installation commandée par programme et en associant des moments de synchronisation de ces opérations partielles de machine, sachant qu'au moins une partie des signaux de commande pour le fonctionnement de la machine ou de l'installation commandée par programme est dérivée d'un organigramme mis à disposition par l'éditeur graphique pour la réalisation des réglages de configuration et des tâches de contrôle par l'utilisateur, lequel organigramme comprend une surface de diagramme en deux dimensions avec un axe de système de machine imaginaire ou visualisé en fonction d'une dimension de composant de machine et avec un axe de temps de déroulement imaginaire ou visualisé en fonction d'une dimension de temps, surface de diagramme dans laquelle toutes les opérations partielles de machine concernées par l'opération globale de machine sont inscrites par un positionnement entièrement automatisé ou semi-automatisé à l'initiative de l'utilisateur des symboles d'opération attribués et/ou de laquelle des symboles d'opérations partielles de machine non utilisées peuvent être à nouveau enlevés, chaque symbole d'opération comprenant au moins un point de rattachement correspondant à au moins un moment de synchronisation de l'opération partielle de machine représentée et un autre point de rattachement dans le cas de la détermination d'autres moments de synchronisation de l'opération partielle de machine représentée pour chacun de ces moments de synchronisation, lesquels points de rattachement sont reliés à chaque fois par une ligne de synchronisation parallèle à l'axe de système de machine avec un point de rattachement d'une opération partielle de machine de la même unité de machine et/ou d'une autre unité de machine, et les symboles d'opération étant positionnés ou repositionnés sur la surface de diagramme par l'éditeur graphique, de telle sorte qu'ils sont disposés dans la dimension de composant de machine en fonction de leur appartenance à une unité de machine et dans la dimension de temps en fonction de la synchronisation de leurs opérations partielles spécifiques de machine avec d'autres opérations partielles de machine de la même unité de machine ou avec des opérations partielles de machine d'autres unités de machine, **caractérisé en ce que**, pour au moins une opération partielle de machine, on visualise une option d'opération bivalente, en particulier la sélection d'un déplacement de machine ou de son contre-déplacement, par la possibilité d'orienter le symbole d'opération spécifique dans chacune de deux directions opposées parallèlement à l'axe de temps d'opération, chaque symbole d'opération d'une telle paire de symboles d'opération étant généré à partir de l'autre symbole concerné, en particulier par la réflexion sur un axe de réflexion parallèle à l'axe de système de machine.

2. Procédé selon la revendication 1, **caractérisé en ce que** la quantité des opérations partielles de machine comprend des délais d'attente dus au processus et réglables.

3. Procédé selon l'une des revendications précédentes, **caractérisé en ce que** l'utilisateur se décide dans un mode de service spécial, par exemple après la sélection du mode de service "programmation" à l'aide d'un sélecteur de mode de service, par la sélection de l'axe de système de machine ou d'un symbole qui est clairement attribué à cet axe, en particulier relié à cet axe, dans le cas d'un choix, confirmé auparavant, effectué dans le mode de service prévu, d'un ensemble d'unités de machine à partir d'un catalogue de l'éditeur graphique pour une configuration entièrement automatisée de l'opération globale de machine correspondante, l'éditeur graphique effectue dans ce cas l'inscription des symboles appartenant aux unités de machine de la configuration prévue dans le catalogue sur l'axe de système de machine, un choix standard parmi les opérations partielles de machine de ces unités de machine, les synchronise de façon entièrement automatique en utilisant des réglages standard, les paramètre, inscrit les symboles d'opération spécifiques dans la surface de diagramme de l'organigramme et établit ainsi la préparation pour la transmission des données de configuration dans une mémoire de programme d'opération de la commande de machine et pour le démarrage de l'opération globale de machine, par exemple par le réglage d'un sélecteur de mode de service sur l'un des deux modes de service "automatique" ou "semi-automatique", de telle sorte que l'éditeur graphique présente, contrairement à ce qui a été dit plus haut en sélectionnant l'axe de système de machine ou un symbole qui est clairement attribué à cet axe dans un mode de service spécial, par exemple dans le mode de service "programmation", sans recourir ,auparavant, côté utilisateur, à un catalogue à l'utilisateur dans un menu, la liste de toutes les configurations déjà mémorisées d'opérations globales de machine pour sélectionner l'une de ces configurations et l'utilisateur prend la décision, après son choix, soit de transmettre les données de cette configuration par exemple par le réglage d'un sélecteur de mode de service sur l'un des deux modes de service "automatique" ou "semi-automatique" sans modification dans la mémoire de programme d'opération de la commande de machine et d'ordonner le démarrage consécutif de l'opération globale de machine soit de les modifier auparavant de façon semi-automatisée, et que l'éditeur graphique met en oeuvre une modification semi-automatisée d'une configuration mémorisée d'une opération globale de machine ou une configuration semi-automatisée d'une nouvelle opération globale de machine établie à partir du catalogue, lorsque l'utilisateur sélectionne au moins l'un des symboles disposés sur l'axe de système de machine pour une unité de machine.

4. Procédé selon l'une des revendications précédentes, **caractérisé en ce que**, dans le cas d'une configuration semi-automatisée d'une opération globale de machine, l'utilisateur sélectionne une opération partielle de machine, à ajouter à cette opération globale de machine, à partir d'éventuellement plusieurs menus ou zones de sélection de l'éditeur graphique, ce menu ou cette zone de sélection offrant une quantité d'opérations partielles de machine disponibles et utilisables pour une unité de machine définie pour la sélection et étant appelé par la sélection du symbole pour cette unité de machine sur l'axe de système de machine de l'organigramme, l'éditeur graphique présentant l'ensemble des lignes de synchronisation et points de rattachement, autorisés pour l'opération partielle de machine sélectionnée pour la définition de la synchronisation, de symboles d'opération de l'opération globale de machine déjà existante dans la surface de diagramme, après quoi l'utilisateur définit, avec le choix d'un point de rattachement présenté ou d'une ligne de synchronisation présentée ou de l'axe de système de machine, la synchronisation dans le temps de l'opération partielle de machine sélectionnée avec l'opération globale de machine déjà existante, et l'éditeur graphique positionne ensuite le symbole d'opération de l'opération partielle de machine sélectionnée sur la surface de diagramme, de telle sorte que ce symbole soit disposé dans la dimension de composant de machine en fonction de son appartenance à une unité de machine et dans la dimension de temps en fonction de sa synchronisation avec d'autres opérations partielles de machine de l'opération globale de machine.

5. Procédé selon la revendication 4, **caractérisé en ce que**, en cas de choix d'une opération partielle de machine réversible ou d'une opération partielle de machine avec option d'opération bivalente par l'utilisateur, en particulier un déplacement linéaire d'une partie de machine, l'éditeur graphique sélectionne en supplément automatiquement l'opération partielle de machine complémentaire ou une opération partielle de machine complémentaire pour le retour de l'unité de machine concernée dans une position de base définie et représente l'ensemble des lignes de synchronisation et points de rattachement, autorisés pour les opérations partielles de machine complémentaires pour la définition de la synchronisation, de symboles d'opération de l'opération globale de machine déjà existante avec marquage de l'attribution de chaque ligne de synchronisation et de chaque point de rattachement à l'une des opérations partielles de machine complémentaires pour la synchronisation suivante des opérations partielles de machine complémentaires avec l'opération globale de machine déjà existante dans la surface de diagramme.

6. Procédé selon la revendication 4, **caractérisé en ce que**, après un achèvement confirmé d'une synchronisation manuelle, seule une quantité partielle de toutes les opérations partielles de machine d'une opération globale de machine par l'utilisateur, l'éditeur graphique ou un sous-programme appelé par celui-ci synchronise les opérations partielles de machine sélectionnées restantes de façon entièrement automatique par rapport aux opérations partielles de machine synchronisées manuellement et complète l'organigramme par l'inscription des symboles d'opération faisant partie de ces opérations partielles de machine synchronisées de façon entièrement automatique par rapport à ceux-ci.

7. Procédé selon l'une des revendications 4 à 6, **caractérisé en ce qu'**une représentation graphique par des lignes de synchronisation ou des points de rattachement ou une représentation supplémentaire sous forme de tableau d'au moins une partie de tous les moments de synchronisation déjà reportés dans le cadre de la mise en place de l'organigramme, est expliquée techniquement par des inscriptions supplémentaires symboliques ou verbales dans le plan de diagramme ou dans une fenêtre affichée en surimpression pour assister le choix côté utilisateur.

8. Procédé selon l'une des revendications précédentes, **caractérisé en ce que** les symboles d'opération graphiques sont inscrits dans l'organigramme avec une extension, correspondant à l'échelle de temps de la durée d'opération, dans le sens de l'axe de temps d'opération.

9. Procédé selon l'une des revendications précédentes, **caractérisé en ce que** l'axe de système de machine de l'organigramme représente, en supplément de la dimension continue de composante de machine, encore d'autres dimensions différentes par endroits et en particulier physiques et les symboles d'opération graphiques sont reportés en conséquence dans l'organigramme avec les échelles de paramètres attribuées aux unités de machine individuelles, généralement différentes, d'extension correspondante, en particulier avec une extension adaptée à l'échelle de déplacement ou à l'échelle de vitesse ou à l'échelle de régime ou adaptée à l'échelle d'accélération ou à l'échelle d'accélération d'angle ou adaptée à l'échelle d'impulsion ou à l'échelle d'impulsion de rotation ou adaptée à l'échelle de force ou adaptée à l'échelle de pression ou adaptée à l'échelle de masse ou adaptée à l'échelle de puissance ou adaptée à l'échelle de bruit dans le sens de l'axe de système de machine.

10. Procédé selon l'une des revendications 8 ou 9, **caractérisé en ce qu'**au moins un symbole d'opération graphique est inscrit avec une extension ainsi dimensionnée en direction de l'axe de temps d'opération dans l'organigramme, **en ce qu'**à chaque fois deux éléments de rattachement graphiques directement voisins et déterminés de façon autorisée tant au plan du calcul qu'au plan technique, donc des points de rattachement ou des lignes de synchronisation, respectent un espacement minimum prédéfini sans tenir compte de leur représentation réelle conçue de façon conforme à la pratique pour le choix par l'utilisateur dans l'organigramme et **en ce que**, à cet effet et si nécessaire, des graduations de l'axe de temps d'opération, qui compriment et/ou allongent au moins partiellement, sont introduites dans l'organigramme.

11. Procédé selon l'une des revendications précédentes, **caractérisé en ce que**, à chaque instant, à chaque fois exactement une opération partielle de machine attribuée est définie pour l'exécution pour chaque unité de machine.

12. Procédé selon l'une des revendications précédentes, **caractérisé en ce que** le paramétrage d'une opération partielle de machine d'une unité de machine s'effectue dans le cours d'une configuration semi-automatisée de l'opération globale de machine, de telle sorte qu'un menu d'entrée et/ou un menu de sélection, à l'aide duquel l'utilisateur entre des valeurs de paramètre ou sélectionne des options de réglage paramétriques, s'ouvre par la sélection du symbole d'opération attribué à cette opération partielle de machine et déjà inscrit dans l'organigramme par l'utilisateur.

13. Procédé selon l'une des revendications précédentes, **caractérisé en ce que**, lors de l'inscription d'un symbole d'opération pour une opération partielle de machine paramétrable dans la surface de diagramme, ses paramètres sont initialisés par l'éditeur avec des valeurs par défaut définies ou calculées ou des valeurs préférentielles caractéristiques, lesquelles peuvent être modifiées de façon sélective par l'utilisateur par des entrées de paramètre consécutives.

14. Procédé selon l'une des revendications précédentes, **caractérisé en ce qu'**un contrôle de paramètres, en particulier lorsque, dans l'organigramme, plusieurs valeurs de paramètre différentes en ce qui concerne leur dimension physique, d'au moins une opération partielle de machine d'une unité de machine peuvent être visualisées, est assisté par la sortie de valeurs pour ces paramètres à proximité locale immédiate des symboles d'opération de ces opérations partielles de machine.

15. Procédé selon l'une des revendications précédentes, **caractérisé en ce que** l'éditeur graphique ou un sous-programme appelé par l'éditeur contrôle l'opération globale de machine au niveau de temporisations inopportunes de cycle de machine, **en ce que**, si on détecte de telles temporisations de cycle de machine, on demande un calcul d'optimisation enregistrant l'opération globale de machine ou un groupe d'opérations partielles de machine ou également seulement une seule opération partielle de machine et soumet à l'utilisateur dans l'organigramme, en même temps qu'un message spécifique à découvrir, des propositions pour l'optimisation de paramètres de certaines opérations partielles de machine sous une forme graphique et/ou de tableau.

16. Procédé selon l'une des revendications précédentes, **caractérisé en ce que** les grandeurs physiques température de vérin, nombre de rotations et vitesse de rotation de la vis sans fin, pression d'accumulation, temps de dosage et recul de vis sans fin, vitesse d'injection, pression d'injection et temps d'injection, hauteur et temps de pression complémentaires, temps de refroidissement et/ou force d'ouverture et force d'éjection sont déterminantes comme paramètres des opérations partielles de machine dosage et/ou injection et/ou pression complémentaire et/ou opération de refroidissement et/ou démoulage dans le cadre de l'opération globale de machine d'une machine de moulage par injection.

17. Procédé selon l'une des revendications précédentes, **caractérisé en ce que** l'axe imaginaire ou visualisée du système de machine et l'axe de temps d'opération imaginaire ou visualisé forment un angle droit.

18. Procédé selon l'une des revendications 2 à 17, **caractérisé en ce que** les temps d'attente dus au processus sont visualisés à chaque fois par le symbole d'opération d'un triangle isocèle rempli et au moins toutes les opérations partielles de machine, pour lesquelles une option d'opération bivalente est définie, et les opérations partielles de machine restantes sont visualisées à chaque fois par le symbole d'opération d'un triangle rectangle vide avec une extension en fonction de la durée d'opération parallèlement à l'axe de temps d'opération et/ou une extension en fonction d'un paramètre, en particulier d'un tronçon de chemin parcouru, d'une vitesse, d'un régime ou d'une fréquence angulaire, d'une accélération, d'une accélération d'angle, d'une impulsion, d'une impulsion de rotation, d'une force, d'une pression, d'une masse, d'une ligne électrique, en particulier d'une puissance de chauffage, et/ou d'une cote de bruit en direction de l'axe du système de machine et avec orientation par un sommet de triangle dans le sens ou dans le sens contraire de l'axe de temps d'opération.

19. Procédé selon l'une des revendications précédentes, **caractérisé en ce que** l'opération globale de machine peut être affinée par l'appel d'une structure d'opération attribuée à au moins un symbole d'opération et déposée dans au moins un plan situé plus bas au niveau hiérarchique avec des symboles d'opération de conception identique, pouvant être manipulés de façon similaire par l'utilisateur et se comportant de façon similaire.

20. Procédé selon l'une des revendications précédentes, **caractérisé en ce qu'**au moins une entrée côté utilisateur est soumise à un contrôle de vraisemblance et **en ce que**, en cas d'inacceptabilité d'une valeur d'entrée, celle-ci est demandée une nouvelle fois par l'éditeur graphique et/ou un message d'erreur est édité dans une fenêtre venant en surimpression dans l'organigramme, et **en ce que** des erreurs de procédé et/ou une défaillance technique de certaines unités de machine de la machine ou de l'installation commandée par programme sont affichées de façon identique par des messages d'erreur.

21. Procédé selon l'une des revendications précédentes, **caractérisé en ce que** l'opération globale de machine est représentée par un cycle de machine ou une succession de plusieurs cycles de machine d'un procédé de moulage par injection et les opérations partielles de machine caractéristiques d'un cycle de machine avec des durées d'opération caractéristiques entre parenthèses sont représentées par les étapes de processus "éjecteur arrière", "fermer moule (1 s)", "ensemble à vis sans fin en avant (0,8 s)", "injection (2 s)", "phase de pression complémentaire (7 s)", "dosage avec début de la plastification (4 s)" et "décharge de la vis sans fin et ensemble à vis sans fin en arrière (1,2 s)" pendant le refroidissement de la pièce injectée, "ouvrir moule (0,8 s)", "éjecteur en avant et en arrière (1 s); plusieurs courses possibles" ainsi que "attente entre cycles (26,8 s)".

22. Dispositif pour l'élaboration, la modification, le contrôle et/ou l'optimisation de l'opération globale de machine d'une machine ou d'une installation commandée par programme, lequel moyen comprend des moyens pour la mise en oeuvre du procédé selon les revendications 1 à 21 et des moyens pour l'entrée côté utilisateur de données de configuration, le traitement électronique des données, la sortie par visualisation graphique et la transmission de données de configuration à la machine ou l'installation commandée par programme dans des états de service, appropriés pour la configuration, de cette machine ou de cette installation.

23. Dispositif selon la revendication 22, **caractérisé en ce qu'**il comprend un éditeur graphique en ligne intégré, lequel peut être rattaché à un traitement en temps réel de la commande de machine ou d'installation.

24. Dispositif selon la revendication 22 ou 23, **caractérisé en ce qu'**il comprend un écran tactile.

25. Dispositif selon l'une des revendications 22 à 24, **caractérisé en ce que** la machine ou l'installation commandée par programme est réalisée par une machine de moulage par injection, dont certaines unités de machine appartiennent à une unité d'injection ou une unité de fermeture ou un socle de machine avec des plaques de fixation pour le maintien du moule ou au système d'entraînement et de commande, avec le pupitre de commande.

26. Dispositif selon la revendication 25, **caractérisé en ce que** l'unité d'injection comprend un ensemble à vis sans fin avec entonnoir et tubulure de versement, ensemble auquel appartiennent un vérin avec vis sans fin, des bandes de chauffage et une buse, une unité de pression pour les déplacements de l'ensemble à vis sans fin dans le sens axial et un entraînement pour des mouvements de translation et/ou des mouvements de rotation axiaux de la vis sans fin.
